(19) Europäisches Patentamt
European Patent Office
Office européen des brevets

(11) **EP 3 171 597 A1**

(12) **EUROPEAN PATENT APPLICATION**
published in accordance with Art. 153(4) EPC

(43) Date of publication:
**24.05.2017 Bulletin 2017/21**

(51) Int Cl.:
***H04N 19/513*** (2014.01)

(21) Application number: **15821693.7**

(22) Date of filing: **15.06.2015**

(86) International application number:
**PCT/JP2015/002970**

(87) International publication number:
**WO 2016/009587 (21.01.2016 Gazette 2016/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **18.07.2014 US 201462026060 P
22.07.2014 US 201462027268 P
23.04.2015 JP 2015088812**

(71) Applicant: **Panasonic Intellectual Property
Corporation
of America
Torrance, CA 90503 (US)**

(72) Inventors:
• **YOSHIKAWA, Satoshi**
**Osaka-shi**
**Osaka 540-6207 (JP)**
• **SASAI, Hisao**
**Osaka-shi**
**Osaka 540-6207 (JP)**

(74) Representative: **Grünecker Patent- und
Rechtsanwälte
PartG mbB
Leopoldstraße 4
80802 München (DE)**

(54) **IMAGE ENCODING METHOD, IMAGE DECODING METHOD, IMAGE ENCODING APPARATUS,
IMAGE DECODING APPARATUS, AND CONTENT DELIVERY METHOD**

(57) An image coding method for coding a plurality of images, includes: a obtaining step (S101) of obtaining motion model information (134) indicating three-dimensional movement of a body in the plurality of images; a reference image generating step (S131) of generating reference image (155) using motion model information (134); and a coding step (S104 to S106) of coding a target image included in the plurality of images by referring to generated reference image (155).

FIG. 10

**Description**

TECHNICAL FIELD

The present invention relates to an image coding method and an image decoding method.

BACKGROUND ART

In an HEVC (High Efficiency Video Coding) standard that is the latest moving image coding standard, various studies have been performed in order to improve coding efficiency (for example, see NPL 1). The HEVC scheme is an ITU-T (International Telecommunication Union Telecommunication Standardization Sector) standard indicated by H.26x and an ISO/IEC standard indicated by MPEG-x, and has been studied as a video coding standard next to a standard indicated by H. 264/AVC (Advanced Video Coding) or MPEG-4 AVC.

Citation List

Non-Patent Literature

NPL 1: Joint Collaborative Team on Video Coding (JCT-VC) of ITU-T SG 16 WP 3 and ISO/IEC JTC 1/SC 29/WG 11 12th Meeting: Geneva, CH, 14-23 Jan. 2013zz JCTVC-L1003_v34 Title: High Efficiency Video Coding (HEVC) text specification draft 10 (for FDIS & Last Call) http://phenix.int-evry.fr/jct/doc_end_user/documents/12_Genev a/wg11/JCTVC-L1003-v34.zip

SUMMARY OF THE INVENTION

In the image coding method and the image decoding method, there is a need to improve the coding efficiency.

The present invention aims to provide an image coding method or an image decoding method capable of improving the coding efficiency.

In order to accomplish the aim, one aspect of the present invention provides an image coding method for coding a plurality of images, the image coding method including: a obtaining step of obtaining motion model information indicating three-dimensional movement of a body in the plurality of images; a reference image generating step of generating a reference image using the motion model information; and a coding step of coding a target image included in the plurality of images by referring to the generated reference image.

Another aspect of the present invention provides an image decoding method for decoding a plurality of images from a bit stream, the image decoding method including: a obtaining step of obtaining motion model information indicating three-dimensional movement of a body in the plurality of images; a reference image generating step of generating a reference image using the motion model information; and a decoding step of decoding a target image included in the plurality of images by referring to the generated reference image.

It should be noted that general or specific aspects may be implemented as a system, a method, an integrated circuit, a computer program, computer-readable recording medium such as a CD-ROM, or any selective combination thereof.

The present invention can provide the image coding method or image decoding method capable of improving the coding efficiency.

BRIEF DESCRIPTION OF DRAWINGS

FIG. 1 is a block diagram illustrating an image coding apparatus according to a first exemplary embodiment.
FIG. 2 is a flowchart illustrating image coding processing of the first exemplary embodiment.
FIG. 3 is a flowchart illustrating motion model information obtaining processing of the first exemplary embodiment.
FIG. 4 is a view illustrating motion model information of the first exemplary embodiment.
FIG. 5 is a view illustrating the motion model information of the first exemplary embodiment.
FIG. 6 is a view illustrating operation to derive the motion model information from meta information in the first exemplary embodiment.
FIG. 7 is a flowchart illustrating prediction block generating processing of the first exemplary embodiment.
FIG. 8 is a flowchart illustrating inter-prediction processing of the first exemplary embodiment.
FIG. 9 is a flowchart illustrating reference image generating processing with the motion model information of the first exemplary embodiment.
FIG. 10 is a view illustrating the reference image generating processing with the motion model information of the first exemplary embodiment.
FIG. 11 is a flowchart illustrating inter-prediction image generating processing of the first exemplary embodiment.
FIG. 12 is a flowchart illustrating motion estimating processing of the first exemplary embodiment.
FIG. 13 is a flowchart illustrating prediction motion vector searching processing of the first exemplary embodiment.
FIG. 14 is a block diagram illustrating an image decoding apparatus according to a second exemplary embodiment.
FIG. 15 is a block diagram illustrating an inter-predictor of the second exemplary embodiment.
FIG. 16 is a flowchart illustrating processing performed with the image decoding apparatus of the second exemplary embodiment.
FIG. 17 is a flowchart illustrating motion model information decoding processing of the second exemplary embodiment.

FIG. 18 is a flowchart illustrating prediction block generating processing of the second exemplary embodiment.

FIG. 19 is a flowchart illustrating inter-prediction processing of the second exemplary embodiment.

FIG. 20 is a diagram illustrating the overall configuration of a content providing system that implements content distribution services.

FIG. 21 is a diagram illustrating the overall configuration of a digital broadcasting system.

FIG. 22 is a block diagram illustrating an example of a configuration of a television.

FIG. 23 is a block diagram illustrating an example of a configuration of an information reproducer/recorder that reads information from and writes information to a recording medium which is an optical disc.

FIG. 24 is a diagram illustrating an example of a structure of an optical disc recording medium.

FIG. 25A is a diagram illustrating an example of a mobile phone.

FIG. 25B is a block diagram illustrating an example of a configuration of the mobile phone.

FIG. 26 is a diagram illustrating a structure of multiplexed data.

FIG. 27 is a diagram schematically illustrating how individual streams are multiplexed into multiplexed data.

FIG. 28 is a diagram illustrating how a video stream is stored in a PES (Packetized Elementary Stream) packet sequence in a more detailed manner.

FIG. 29 is a diagram illustrating structures of a TS (Transport Stream) packet and a source packet in multiplexed data.

FIG. 30 is a diagram illustrating a data structure of a PMT (Program Map Table).

FIG. 31 is a diagram illustrating an internal structure of multiplexed data information.

FIG. 32 is a diagram illustrating an internal structure of stream attribute information.

FIG. 33 is a diagram illustrating steps for identifying video data.

FIG. 34 is a block diagram illustrating an example of a configuration of an integrated circuit that implements a video coding method and a video decoding method according to each of the exemplary embodiments.

FIG. 35 is a diagram illustrating a configuration for switching between driving frequencies.

FIG. 36 is a diagram illustrating steps for identifying video data and switching between driving frequencies.

FIG. 37 is a diagram illustrating an example of a lookup table in which a video data standard and a driving frequency are associated with each other.

FIG. 38A is a diagram illustrating an example of a configuration that enables sharing of modules among signal processors.

FIG. 38B is a diagram illustrating another example of a configuration that enables sharing of modules among signal processors.

DESCRIPTION OF EMBODIMENT

(Underlying knowledge of the present invention)

Pieces of information about the frames before and after the target frame are used in prediction image generating processing of a conventional image coding scheme. For example, in generating the motion vector in H.264/AVC and H.265/HEVC, information about a temporally and spatially close block is used as a prediction motion vector to reduce a code amount necessary for the generation of the motion vector.

However, even in a body in which motion, such as motion of a car on a road, is easily predicted from one image, situation or environment information read from the image can hardly be used in the conventional image coding apparatus.

At the same time, there is developed an image recognition technology in which body recognition typified by face recognition and a technology associated with computer vision such as machine learning are applied. The inventor of the present invention found that information frequently generated in the moving image is analyzed by applying the image recognition technology, and the motion of the body can be estimated using the information.

For example, a traffic line of a human from the image of a monitoring camera of a store may be analyzed to estimate a behavior pattern of a customer in the store. There is also proposed processing of generating, from the image, three-dimensional information such as depth information, using a plurality of pieces of image information obtained from the use of a plurality of cameras and a time change in the moving image.

The inventor of the present invention found that information to be coded can be reduced using these pieces of information in inter-prediction image generating processing of moving image coding processing. The exemplary embodiments illustrate an image coding method and an image decoding method for extracting recognition information such as a structure and a trend from the moving image and generating, in the prediction image generating processing, a prediction image with an information amount less than that of an existing technique by using the extracted recognition information.

One aspect of the present invention provides an image coding method for coding a plurality of images, the image coding method including: a obtaining step of obtaining motion model information indicating three-dimensional movement of a body in the plurality of images; a reference image generating step of generating a reference image using the motion model information; and a coding step of coding a target image included in the plurality of images by referring to the generated reference image.

Therefore, the use of the motion model information generates a prediction image with few information amount, so that the coding efficiency can be improved.

For example, in the obtaining step, the motion model information may be extracted from at least one image included in the plurality of images.

For example, in the reference image generating step, an object image may be generated by performing deformation processing on a representative image of the body based on the motion model information, and the reference image may be generated by a combination of the object image and a background image.

For example, the motion model information may be expressed as a plurality of coefficients of a high-order transform matrix, and in the reference image generating step, the deformation processing may be performed by calculating the representative image using the high-order transform matrix.

For example, the high-order transform matrix may include a coefficient changing with time.

For example, the image coding method may further include: a prediction step of calculating a prediction value of a motion vector of a block included in the target image using the motion model information; and a motion searching step of performing motion searching processing on the block using the prediction value as an initial value.

Therefore, the time necessary for the motion searching processing can be shortened by setting the initial value of the motion searching processing using the motion model information.

For example, the image coding method may further include: an estimating step of estimating the motion vector of the block included in the target image; a prediction step of calculating a prediction motion vector candidate for the block included in the target image using the motion model information; and a motion vector coding step of coding a difference between one of a plurality of prediction motion vector candidates including the calculated prediction motion vector candidate and the estimated motion vector.

Therefore, the prediction motion vector candidate is calculated using the motion model information, so that the coding efficiency can be improved.

Another aspect of the present invention provides an image decoding method for decoding a plurality of images from a bit stream, the image decoding method including: a obtaining step of obtaining motion model information indicating three-dimensional movement of a body in the plurality of images; a reference image generating step of generating a reference image using the motion model information; and a decoding step of decoding a target image included in the plurality of images by referring to the generated reference image.

Therefore, the use of the motion model information generates a prediction image with few information amount, so that the coding efficiency can be improved.

For example, in the obtaining step, the motion model information may be obtained from the bit stream.

For example, in the reference image generating step, an object image may be generated by performing deformation processing on a representative image of the body based on the motion model information, and the reference image may be generated by a combination of the object image and a background image.

For example, the motion model information may be expressed as a plurality of coefficients of a high-order transform matrix, and in the reference image generating step, the deformation processing may be performed by calculating the target image using the high-order transform matrix.

For example, the high-order transform matrix may include a coefficient changing with time.

For example, the image decoding method may further include: a difference motion vector decoding step of decoding a difference value of the motion vector of the block included in the target image; a prediction step of calculating a prediction motion vector candidate for the block included in the target image using the motion model information; and a calculating step of calculating the motion vector by adding one of a plurality of prediction motion vector candidates including the calculated prediction motion vector candidate and the difference value to each other.

Therefore, the prediction motion vector candidate is calculated using the motion model information, so that the coding efficiency can be improved.

Still another aspect of the present invention provides an image coding apparatus that codes a plurality of images, the image coding apparatus including: processing circuitry; and a memory connected to the processing circuitry. At this point, the processing circuitry performs the image coding method using the memory.

Therefore, the use of the motion model information generates a prediction image with few information amount, so that the coding efficiency can be improved.

Yet another aspect of the present invention provides an image decoding apparatus that decodes a plurality of images from a bit stream, the image decoding apparatus including: processing circuitry; and a memory connected to the processing circuitry. At this point, the processing circuitry performs the image decoding method using the memory.

Therefore, the use of the motion model information generates a prediction image with few information amount, so that the coding efficiency can be improved.

Yet another aspect of the present invention provides a content distribution method including: a receiving step of receiving a content distribution request; and a transmitting step of transmitting a content subjected to the image coding method based on the content distribution request.

Therefore, the use of the motion model information generates a prediction image with few information amount, so that the coding efficiency can be improved.

It should be noted that comprehensive or specific aspects may be implemented as a system, a method, an integrated circuit, a computer program, computer-readable recording medium such as a CD-ROM, or any selective combination thereof.

Hereinafter, exemplary embodiments will specifically be described with reference to the drawings. The following exemplary embodiments illustrate a comprehensive or specific example. A numerical value, a shape, a material, a component, a position and a connection forms of the component, a step, the order of the steps, and the like described in the following exemplary embodiments are illustrative only, but do not limit the present invention.

Sometimes a detailed description of a known item and an overlapping description about a substantially identical component are omitted. This is because the following description is avoided from becoming unnecessarily redundant to make those skilled in the art understand the exemplary embodiments

In the exemplary embodiments, sometimes a frame is described while replaced with a picture or an image. Sometimes a coding target frame or a decoding target frame (the picture or the image) is described while replaced with a target picture (current picture) or a target frame (current frame). Additionally, the frame is described while replaced with various terms generally used in the codec technology field.

FIRST EXEMPLARY EMBODIMENT

An image coding apparatus according to a first exemplary embodiment performs inter-prediction processing using the motion model information indicating a trend of body deformation and three-dimensional motion. Therefore, the coding efficiency can be improved in the image coding apparatus.

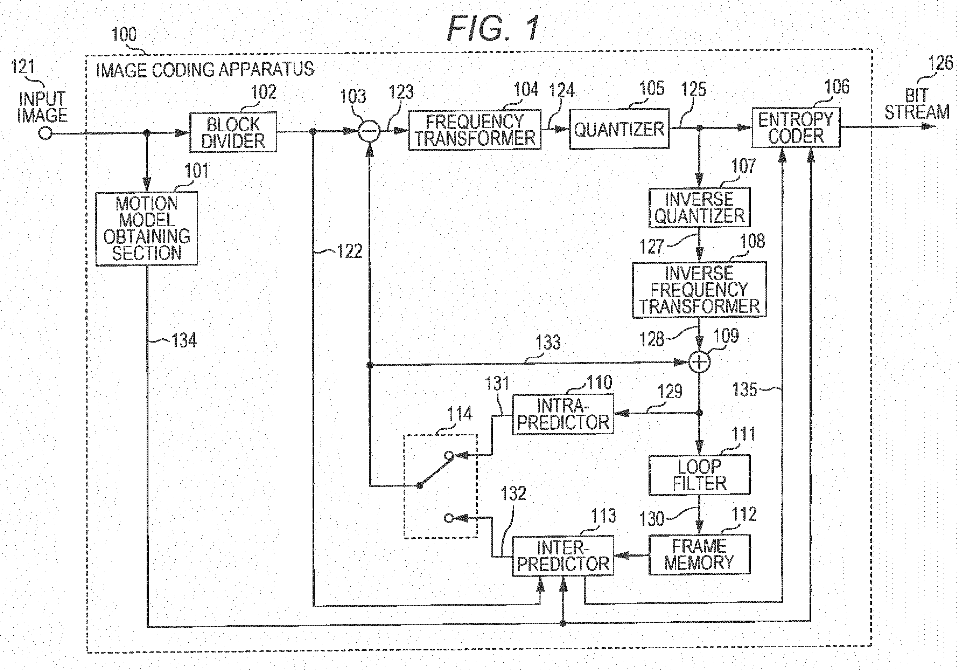

A configuration of image coding apparatus 100 of the first exemplary embodiment will be described below. FIG. 1 is a block diagram illustrating an example of image coding apparatus 100 of the first exemplary embodiment. Image coding apparatus 100 includes motion model obtaining section 101, block divider 102, subtractor 103, frequency transformer 104, quantizer 105, entropy coder 106, inverse quantizer 107, inverse frequency transformer 108, adder 109, intra-predictor 110, loop filter 111, frame memory 112, inter-predictor 113, and switch 114.

Image coding apparatus 100 generates bit stream 126 by coding input image 121 that is a still image or a moving image including at least one image.

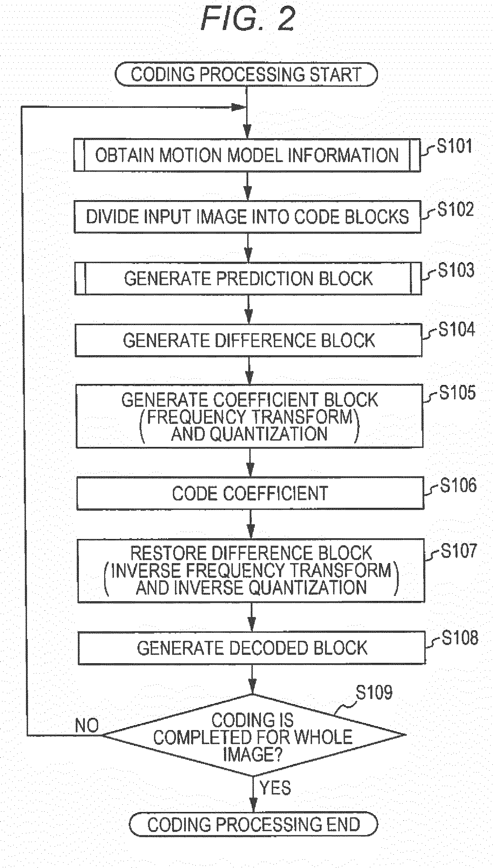

Operation of image coding apparatus 100 will be described below. FIG. 2 is a flowchart illustrating image coding processing performed with image coding apparatus 100 of the first exemplary embodiment.

Using input image 121, motion model obtaining section 101 extracts (calculates) the motion model information that is information about a relative change of an object due to a spatial position (S101). The detailed processing will be described later.

Block divider 102 divides input image 121 into a plurality of coding blocks 122 which serve as units of the coding processing (S102). Intra-predictor 110 or inter-predictor 113 performs prediction processing on coding block 122 using decoded block 129 or decoded image 130, thereby generating prediction block 133 (131 or 132) (S103). The detailed processing will be described later. Prediction information 135 that is information about the prediction processing is transmitted to entropy coder 106, and coded. Specifically, prediction information 135 includes information indicating a prediction mode, a reference image, a motion vector, and the like, which are used.

Then, subtractor 103 generates difference block 123 that is a difference between coding block 122 and prediction block 133 (S104). Frequency transformer 104 performs frequency transform of difference block 123 to generate coefficient block 124. Quantizer 105 quantizes coefficient block 124 to generate coefficient block 125 (S105).

Entropy coder 106 performs entropy coding of coefficient block 125 to generate bit stream 126 (S106). Inverse quantizer 107 performs inverse quantization of coefficient block 125 to generate coefficient block 127, and inverse frequency transformer 108 performs inverse frequency transform of coefficient block 127 to restore difference block 128 (S107). Adder 109 adds difference block 128 and prediction block 133 to each other to generate decoded block 129 (reconstructed image) (S108). Decoded block 129 is used in intra-prediction processing performed with intra-predictor 110.

Image coding apparatus 100 repeatedly performs the series of pieces of processing until the coding processing is completed for whole input image 121 (S109).

When the coding processing is completed for the whole of one image, loop filter 111 performs filter processing for image quality improvement, such as deblocking filtering which relieves image quality degradation due to block strain, on a plurality of decoded blocks 129 included in one image, thereby generating decoded image 130. Frame memory 112 stores decoded image 130 therein. Decoded image 130 is used in the inter-prediction processing performed with inter-predictor 113.

The frequency transform and quantization processing in step S105 may separately and sequentially be performed, or collectively be performed. Similarly, the inverse quantization processing and the inverse frequency transform processing in step S107 may separately and sequentially be performed, or collectively be performed.

The quantization means processing of digitizing a value sampled at predetermined intervals while correlating the value to a predetermined level. The inverse quantization means processing of restoring a value obtained through the quantization to a value of an original interval. In the data compression field, the quantization means processing of dividing a value into intervals coarser than the original interval, and the inverse quantization means processing of dividing the coarser interval into the finer original intervals. In the codec technology field, sometimes the quantization and the inverse quantization are referred to as rounding off, rounding, or scaling.

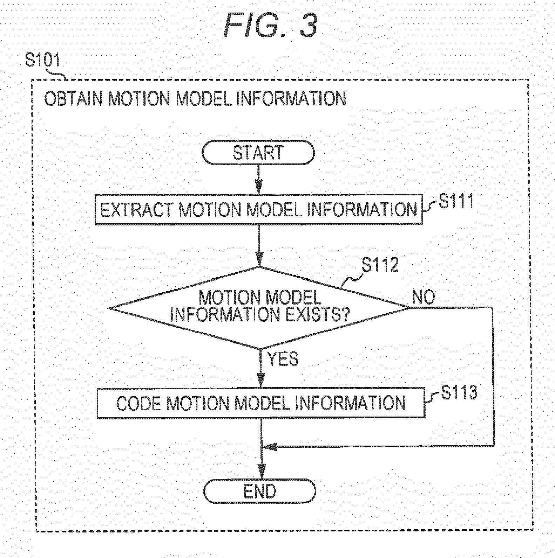

The detailed motion model information obtaining processing in step S101 will be described below with reference to a flowchart in FIG. 3.

Motion model obtaining section 101 extracts a motion model using at least one input image 121 (S111). The motion model indicates a body characteristic change in the captured moving image. In other words, the motion model is a trend of body motion in the moving image, is information indicating statistical motion, and indicates three-dimensional movement. The three-dimensional movement includes movement in a depth direction in addition to movement in a plane direction. Specifically, the three-dimensional movement is a size change of the body on the image caused by a depth position or a motion amount change of the body on the image caused by the depth position. In other words, the motion model indicates the trend of the motion and deformation of the body. The motion model may be set in each area of the image.

In a condition or a situation in which a photographing target or a camera installation place can be specified to a certain degree using the motion mode, more information can be estimated from a small information amount. For example, in the moving image captured with the monitoring camera, a person size decreases as a person shown on the front side moves toward the depth side. The trend of a traveling direction or velocity of the car can be found according to a car running lane on the road.

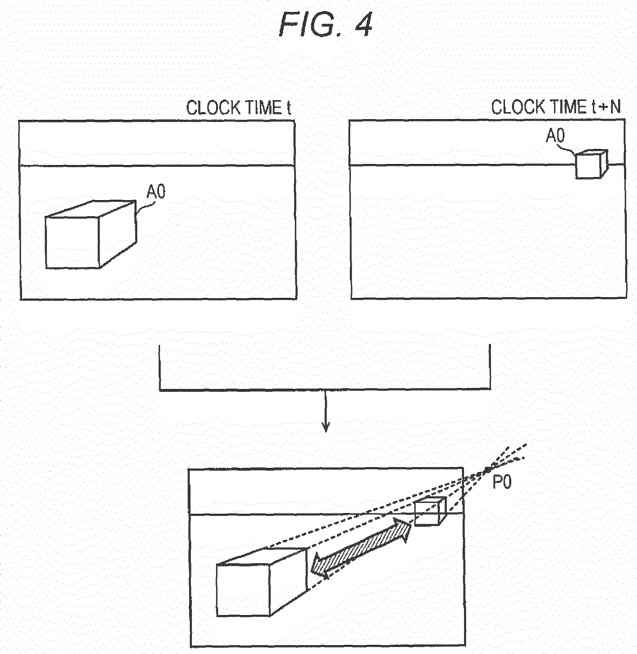

For example, as illustrated in FIG. 4, for the moving image such that body A0 moves from a lower left on the front side of the screen toward an upper right on the depth side of the screen, the size (looking way) of the moving body changes regularly toward the depth direction. Specifically, in the image, the size of body A0 is shown in smaller as body A0 moves toward the depth side of the screen. In this case, for example, the motion model indicates the motion direction of body A0, a degree of change in size of the body in association with the motion, and coordinates of vanishing point P0 of the body.

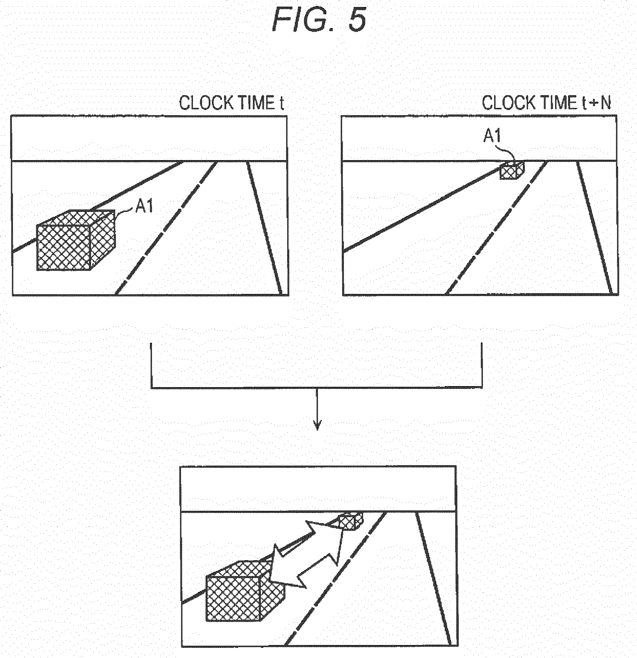

In an example of FIG. 5, a road extends from a front side of the screen toward a depth of the screen. Body A1 exists on the road, exists on the front side of the screen at clock time t, and exists on the depth side of the screen at clock time t+N. Because each lane is one-way traffic, a motion vector direction of the object on the road is matched with traveling direction on the lane. In the example of FIG. 5, because body A1 exists on a left lane of the road, it is found that body A1 moves toward a left depth direction. That is, motion model obtaining section 101 is information indicating a given rule in an image space in which the motion vectors of the body are always similar in a specific area (for example, the road).

Motion model obtaining section 101 can also extract the motion model only from one image. For example, in the case where the road exists in the image, the body (for example, the car) can be estimated to move along the road. The body traveling direction can be specified according to the right lane or the left lane.

Thus, motion model obtaining section 101 extracts predictable information from an environment as the motion model. For example, the motion model is expressed by an affine transform matrix or a projective transform matrix. Various matrixes include a variable of a time component. That is, the motion model is information indicating a change in position, moving direction, velocity, or size of the body accompanying time change. Specifically, the motion model indicates the change in position, moving direction, velocity, or size of the body in consideration of velocity or acceleration information about the body on a certain road. For example, in the case where many automobiles on the road move at constant velocity, the motion model information includes information about the velocity. Therefore, the velocity can be adapted to a new object, so that the code amount can be reduced.

Then, motion model obtaining section 101 determines whether the motion model has been successfully extracted extracted from input image 121 (S112). When the motion model has been successfully extracted extracted (Yes in S112), the motion model obtaining section 101 adds motion model information 134 indicating the extracted motion model to coding target information. The motion model information may be information (for example, a variable of the matrix) indicating the motion model itself, or information specifying the motion model. Therefore, entropy coder 106 generates bit stream 126 including motion model information 134 by coding motion model information 134 (S113).

A specific example of a motion model extracting technique will be described below. Motion model obtaining section 101 extracts the object from input image 121, and chases a change in coordinates and size of the extracted object with time. For example, motion model obtaining section 101 extracts the object by using a technique, such as SIFT (Scale-Invariant Feature transform) and HoG (Histograms of Oriented Gradients), in which a characteristic amount is used.

Not only motion model obtaining section 101 chases one object, but also motion model obtaining section 101 may use a relationship with a plurality of objects. For example, in the case where the plurality of objects appearing in a specific area (for example, a lower-left portion of the image) have the directions and sizes of the motion vectors within given ranges, motion model obtaining section 101 assumes all the objects appearing in the specific area to be the body having the motion vector within the given range. In this case, motion model obtaining section 101 extracts (1) information specifying the specific area or the object in the specific area and (2) information specifying the motion vector as the motion model.

In the case where meta information is provided to the image, image coding apparatus 100 may calculate the motion model using the meta information. As used herein, the meta information means information indicating a position and size of each body in the image.

FIG. 5 is a view illustrating operation to calculate the motion model information using the meta information. As illustrated in FIG. 5, the meta information is set to each frame. The meta information about each frame indicates an ID uniquely identifying the object in the video, coordinates (coordinate x and coordinate y) of the object, and sizes (a width and a height) of the object with respect to each of the plurality of objects in the frame.

Image coding apparatus 100 calculates a difference between the pieces of meta information about the objects of the frames. Specifically, a difference of each element (each of coordinate x, coordinate y, the width, and the height) of each object between the frames is calculated. Then, image coding apparatus 100 generates the motion model information in each object based on the calculated difference.

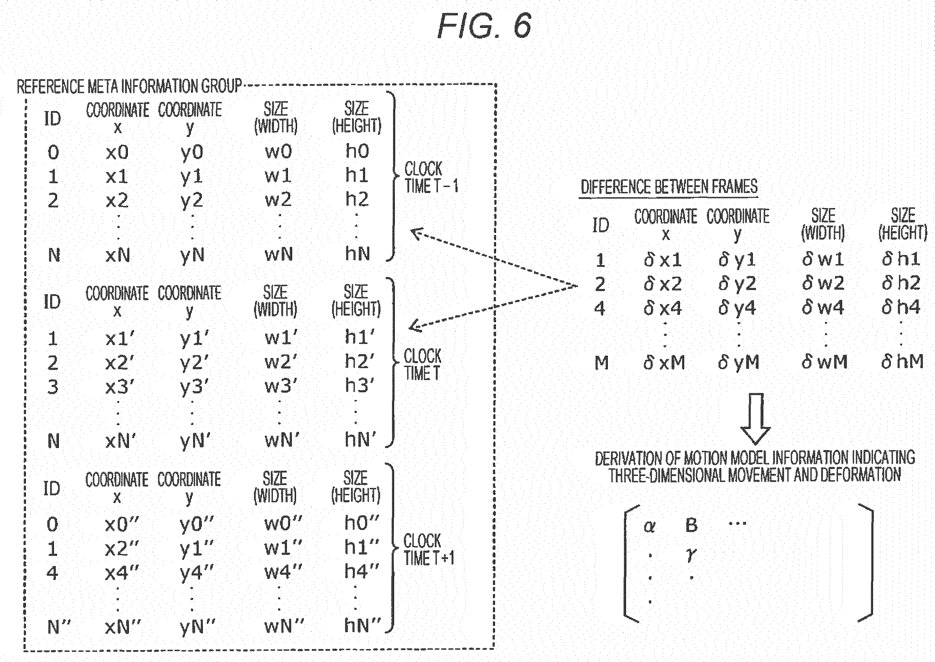

For example, a difference between the meta information about the frame at clock time T-1 and the meta information about the frame at clock time T is calculated in an example of FIG. 6. Image coding apparatus 100 derives an amount of change in two-dimensional coordinates per unit time (the difference between clock time T-1 and clock time T) of the object based on the difference between coordinates x and the difference between coordinates y in each object. Image coding apparatus 100 derives an amount of change in size per unit time of the object based on the difference between the widths and the difference between the heights. Therefore, the motion model information defining the movement (the change in two-dimensional coordinates) and deformation accompanying the time change of each object is generated.

The motion model information may indicate the size or shape or the change in size or shape of the object with respect to the position (two-dimensional coordinates) or the change in position of each object. For example, image coding apparatus 100 derives the relationship from the difference between coordinates x, the difference between coordinates y, the difference between the widths, and the difference between the heights in each object.

Image coding apparatus 100 may derive one piece of motion model information using the difference of each element of the plurality of objects. For example, the meta information includes attribute information indicating an attribute (such as a car and a person) of the object. In the case where a plurality of objects having an identical attribute exist, using the difference of each element of the plurality of objects having the identical attribute, image coding apparatus 100 may derive one piece of motion model information corresponding to the object having the attribute.

The meta information used is not limited to two frames, but a difference of the meta information of at least three frames may be used.

Image coding apparatus 100 may code motion model information 134 in an image unit, or code only one piece of motion model information 134 with respect to a stream. For a fixed point video photographed with a monitoring camera, the motion model does not change largely because an imaging range moves slightly. Therefore, image coding apparatus 100 generates bit stream 126 including one piece of motion model information 134 in a sequence unit. The image decoding apparatus uses motion model information 134 with respect to the plurality of images. Therefore, a code amount of motion model information 134 can be reduced.

Image coding apparatus 100 does not extract the motion model from input image 121, but may obtain a parameter indicating the motion model from at least an external apparatus or an external server that is temporarily connected to image coding apparatus 100 in a wired or wireless manner. For example, a video processing apparatus outside image coding apparatus 100 may perform motion model extracting processing, and image coding apparatus 100 may obtain information about the obtained motion model. Therefore, it is not necessary for image coding apparatus 100 to perform the video analysis processing, so that a processing amount of image coding apparatus 100 can be reduced.

Alternatively, motion model information 134 is not included in bit stream 126, but may be transmitted to the image decoding apparatus by another technique. For example, in the case where the motion model is known like the video captured with a fixed camera, the motion model common to image coding apparatus 100 and the image decoding apparatus may previously be set. Therefore, the code amount can be reduced because bit stream 126 needs not to include motion model information 134.

The plurality of motion models are previously set to image coding apparatus 100 and image decoding apparatus, and image coding apparatus 100 may code only an index indicating which one of the motion models is used. Therefore, the code amount can be reduced because only information about the index is coded in the case where the plurality of motion models are used by a scene change.

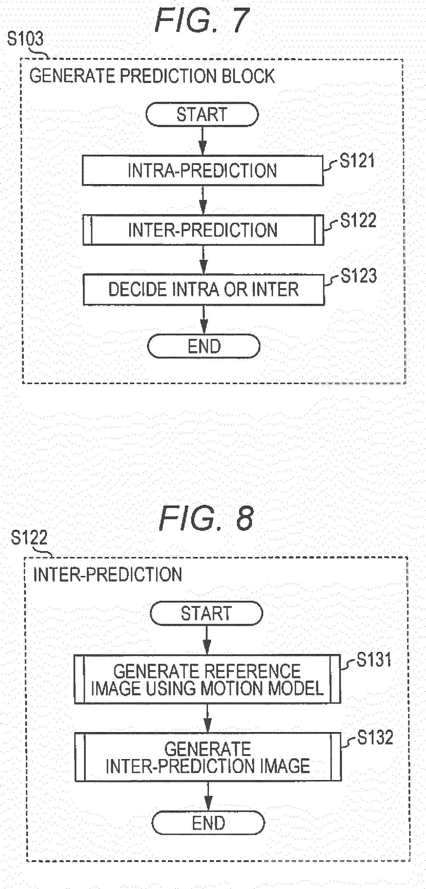

The prediction block generating processing in step S103 of FIG. 2 will be described below with reference to a flowchart in FIG. 7.

Intra-predictor 110 performs the intra-prediction processing using information in the screen, thereby generating prediction block 131 (S121). Then, inter-predictor 113 performs the inter-prediction processing using information about inter-screen, thereby generating prediction block 132 (S122). Then, switch 114 selects a technique having high coding efficiency from prediction blocks 131 and 132 obtained in steps S121 and S122, and outputs the prediction block generated by the selected technique as prediction block 133 (S123). Specifically, switch 114 performs cost calculation of each of prediction blocks 131 and 132 using an R-D optimization model obtained by (Equation 1), and selects the prediction block having smaller cost.

$$Cost = D + \lambda \times R \ldots \quad (Equation\ 1)$$

Where D is a coding strain, for example, an absolute sum of the difference between an original pixel value of a coding target block and the generated prediction block. R is a generation code amount, for example, the code amount necessary for the coding of the prediction information (such as the motion vector) generating the prediction block. $\lambda$ is a Lagrange undetermined multiplier. Therefore, the coding efficiency can be improved because a prediction mode is properly selected from the intra-prediction and the inter-prediction.

Before the pieces of prediction processing in steps S121 and S122, image coding apparatus 100 may decide which one of the pieces of prediction processing is used, and perform only the decided prediction processing. Therefore, a processing amount of the prediction image generating processing can be reduced.

Image coding apparatus 100 codes prediction information 135 including information indicating which one of the intra-prediction and the inter-prediction is used.

The inter-prediction processing in step S122 will be described below with reference to a flowchart in FIG. 8.

Inter-predictor 113 generates the reference image using the motion model indicated by motion model information 134 and already-coded decoded image 130 (S131). Using the motion information, the inter-prediction processing adopted in the H.264/AVC scheme or H. 265/HEVC scheme is performed to generate the prediction image (prediction block 132) (S132).

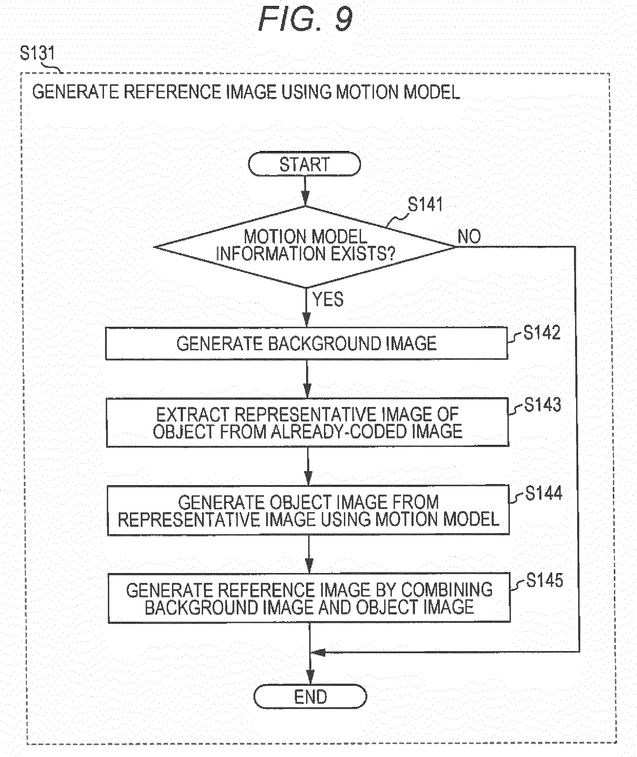

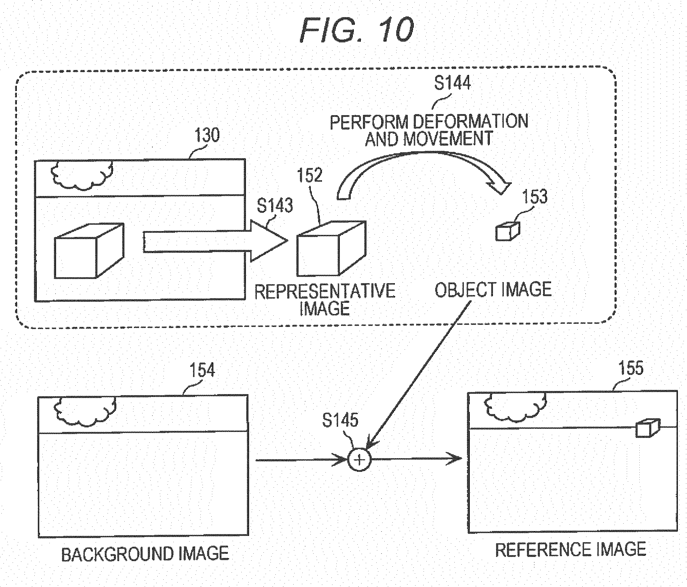

The reference image generating processing with the motion model in step S131 will be described below with reference to a flowchart in FIG. 9 and FIG. 10.

Inter-predictor 113 determines whether motion model information 134 available in the target frame exists (S141). When motion model information 134 available in the target frame does not exist (No in S141), inter-predictor 113 ends the processing in step S131.

On the other hand, when motion model information 134 available in the target frame exists (Yes in S141), inter-predictor 113 generates background image 154 that is a background image of reference image 155 (S142). Specifically, inter-predictor 113 calculates a mean or a median of pixel values of the coordinates of at least two decoded images 130 to generate background image 154. At this point, all decoded images 130 in the sequence may be used, or any decoded image 130 may be used. In the former, background image 154 having extremely high image quality can be generated in the image of the fixed camera in which the background does not move. In the latter, background image 154 can be generated with a small processing amount because only the image including a large amount of background can be selected. Inter-predictor 113 may generate background image 154 using only images from the independently decodable image immediately before the target frame. Therefore, background image 154 can be generated while random accessibility is maintained. Inter-predictor 113 may directly use one decoded image 130 as background image 154. Information indicating one or the plurality of decoded images 130 used to generate background image 154 may be transmitted to the image decoding apparatus while included in bit stream 126, or the information may be transmitted to the image decoding apparatus in another way.

For example, background image 154 may be a predetermined image stored in a server. In this case, information designating background image 154 or coded data of background image 154 may be transmitted to the image decoding apparatus while included in bit stream 126, or the information or the coded data may be transmitted to the image decoding apparatus in another way.

Inter-predictor 113 extracts at least one representative image 152 that is an original image of each object from already-coded decoded image 130 (S143). Information indicating representative image 152 may be transmitted to the image decoding apparatus while included in bit stream 126, or the information may be transmitted to the image decoding apparatus in another way. Specifically, the information indicating representative image 152 includes information designating decoded image 130 of an object extracting target and information designating which one of the objects is extracted from decoded image 130. For example, the information designating decoded image 130 is indicated by a POC (Picture Order Count) in H.264/AVC and H.265/HEVC. That is, the information indicates the POC of decoded image 130 of the object extracting target. For example, the information designating the object to be extracted is coordinate information indicating the coordinates of the object. At this point, the coordinate information may indicate the coordinates themselves, or indicate the coordinate in a unit in which the plurality of images are dealt with as one unit (for example, a 4-by-4 pixel is dealt with as one block). In the former, each object can be extracted even in the image in which small objects exist densely. In the latter, because the information designating the object to be extracted is reduced, the code amount of generated bit stream 126 can be reduced.

For example, representative image 152 may be a predetermined image stored in a server. In this case, the information designating image representative image 152 or the coded data of representative image 152 may be transmitted to the image decoding apparatus while included in bit stream 126, or the information or the coded data may be transmitted to the image decoding apparatus in another way.

Inter-predictor 113 deforms and moves representative image 152 using the motion model indicated by motion model information 134, thereby generating object image 153 in the target frame (S144). For example, inter-predictor 113 deforms and moves representative image 152 using the affine transform matrix or projective transform matrix in which the motion model is expressed by each coefficient. Inter-predictor 113 may reproduce a change of the looking way (such as a shadow falling way and a change in shade) of the object in a three-dimensional space using information (such as a light source position) constituting the three-dimensional space as the motion model. Therefore, inter-predictor 113 deals with the deformation that is hardly expressed by the projective matrix, so that the quality of generated reference image 155 can further be improved.

In the case where the plurality of objects exist in the image, the above processing is performed on each object.

In the case where representative image 152 is deformed using the motion model, sometimes there is generated a problem of an occlusion in which a portion not included in representative image 152 is visually sensed. In such cases, inter-predictor 113 may obtain the object stored in the external server or the information or image of the similar object, and generate object image 153 by a combination of the obtained information or image and deformed representative image 152.

Image coding apparatus 100 may code difference information between the motion information after the deformation processing performed using the motion model and actual motion information detected during the coding processing. Therefore, image coding apparatus 100 can generate reference image 155 closer to the original image even in the motion that cannot be predicted from the deformation of the motion model information like a lane change in traffic monitoring video.

Finally, inter-predictor 113 generates reference image 155 by combining background image 154 and object image 153 (S145). For example, inter-predictor 113 generates reference image 155 by overlapping background image 154 and object image 153 with each other. In the case where a plurality of objects exists, image coding apparatus 100 may code information indicating order in which a plurality of object images 153 are overlapped with each other. In image coding apparatus 100 and the image decoding apparatus, the order of overlapping the plurality of objects may be predicted from the motion model information by a similar technique. In the former, the combination processing is clearly indicated in bit stream 126, so that the image decoding apparatus can generate optimum reference image 155. In the latter, the code amount can be reduced because the information included in bit stream 126 is reduced.

Through the above processing, one or the plurality of reference images 155 may be generated with respect to the target frame. For example, different reference image 155 may be generated in each object included in the target frame. Therefore, optimum reference image 155 is generated with respect to each object, so that the coding efficiency can be improved. Inter-predictor 113 may generate the reference image in a processing block unit without performing the processing of generating reference image 155 in an image unit. Therefore, the reference image is generated in a smaller unit compared with the image, so that a capacity of a memory in which the reference image is stored can be reduced.

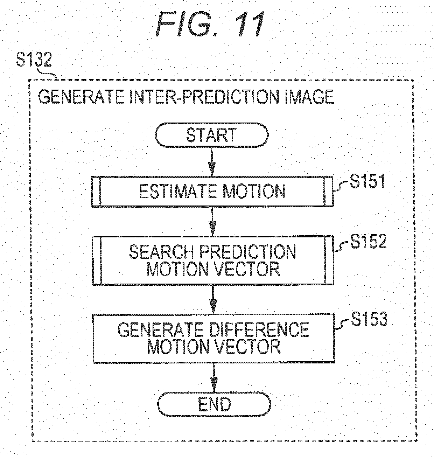

The detailed inter-prediction image generating processing in step S132 will be described below with reference to a flowchart in FIG. 11.

Inter-predictor 113 performs motion estimating processing of estimating the motion vector in order to generate the prediction image (prediction block 132) (S151). Inter-predictor 113 selects the motion vector closer to the obtained motion vector from the motion vectors used in peripheral already-coded coding block as a prediction motion vector (S152). Then, inter-predictor 113 generates a difference motion vector that is a difference between the motion vector obtained in step S151 and the prediction motion vector obtained in S152 (S153). The information indicating the selected prediction motion vector and the difference motion vector are coded, and included in bit stream 126.

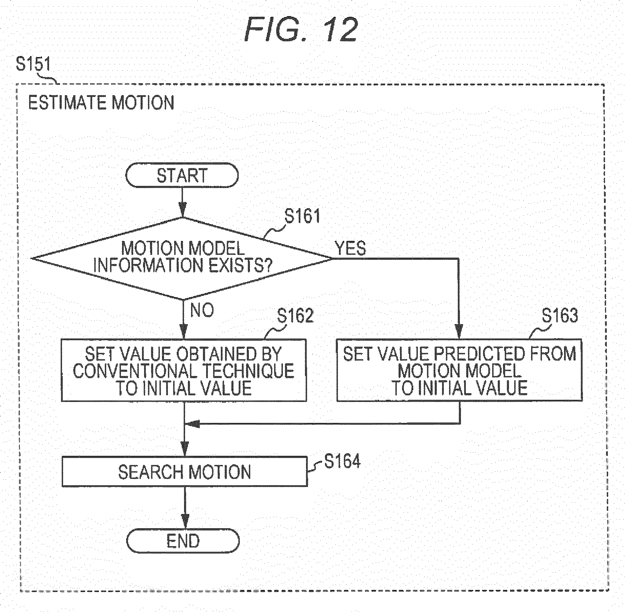

The motion estimating processing in step S151 will be described below with reference to a flowchart in FIG. 12.

Inter-predictor 113 determines whether motion model information 134 corresponding to the target frame exists (S161). When motion model information 134 corresponding to the target frame does not exist (No in S161), inter-predictor 113 sets a default value to an initial value (initial information) of the motion searching processing (S162). As used herein, the default value means a value used in the conventional motion estimating processing such as H.264/AVC and H.265/HEVC. For example, the default value is the motion vector in the peripheral already-coded block in the time direction and the spatial direction.

On the other hand, when motion model information 134 corresponding to the target frame exists (Yes in S161), inter-predictor 113 sets a value predicted from the motion model to each block as the initial value of the motion searching processing (S163).

Specifically, inter-predictor 113 determines which one of the motion models is applied to the target block. For example, inter-predictor 113 extracts the object from the target frame, and determines which one of the objects (such as the background, the car, and the person) corresponds to the target block. Then, inter-predictor 113 predicts the motion information about the target block using information such as a determination result and a position of the target block in the image. Specifically, in the video in which a pedestrian crossing is captured, it can be predicted that the object recognized as a person moves along the pedestrian crossing. Therefore, inter-predictor 113 sets the motion information along the pedestrian crossing to the initial value. For the video determined to be the background, inter-predictor 113 sets a value indicating that the motion does not exist to the initial motion information.

Inter-predictor 113 performs the motion searching processing with the initial value set in step S162 or S163 as the initial value of a search point (S164).

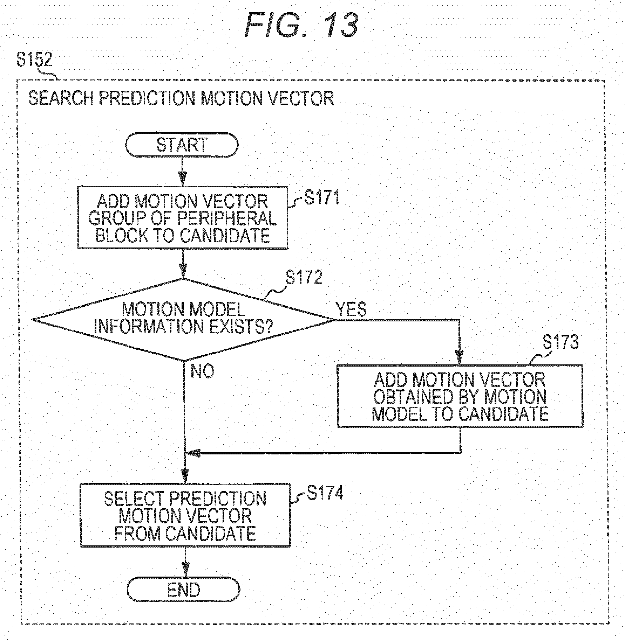

The detailed prediction motion vector searching processing in step S152 will be described below with reference to a flowchart in FIG. 13.

Inter-predictor 113 adds motion vector used in at least one already-coded block existing in the periphery of the target block to the prediction motion vector candidate (S171). Inter-predictor 113 determines whether motion model information 134 corresponding to the target frame exists (S172).

When motion model information 134 corresponding to the target frame exists (Yes in S172), inter-predictor 113 adds the motion vector predicted by the motion model to the prediction motion vector candidate (S173). A technique similar to the technique in step S163 can be adopted as the specific processing technique.

Using the plurality of prediction motion vector candidates obtained through the pieces of processing and the motion vector obtained in S164, inter-predictor 113 selects the prediction motion vector used in the coding processing (S174). Specifically, inter-predictor 113 calculates a difference between the motion vector obtained in step S164 and each of the plurality of prediction motion vector candidates, and selects the prediction motion vector candidate having the smallest code amount of the difference as the prediction motion vector.

(Effect)

In image coding apparatus 100 of the first exemplary embodiment, use of motion model information 134 that can be obtained from the moving image improves accuracy of the prediction motion vector, so that the motion information necessary for the generation of the prediction image can be reduced. Using the structure information or statistical information in the moving image, image coding apparatus 100 can generate the high-quality prediction image with a small amount of motion information.

Image coding apparatus 100 may obtain motion model information 134 except for the moving image, or obtain motion model information 134 from the outside.

For example, in image coding apparatus 100, information obtained with a device such as a millimetric wave radar may be used as motion model information 134. Therefore, the processing amount can be reduced in the motion model analysis processing performed with image coding apparatus 100. In image coding apparatus 100, information obtained from another device may be used as auxiliary information when motion model information 134 is obtained from the moving image. Therefore, image coding apparatus 100 can obtain the higher-quality motion model information 134 compared with the case where motion model information 134 is obtained from the single image.

At least one motion model information 134 may exist in one sequence, but motion model information 134 may be switched according to the frame to be processed. Therefore, image coding apparatus 100 properly uses the motion model even if a large variation such as a scene change occurs in the moving image, so that the coding efficiency can be improved.

Image coding apparatus 100 may update the motion model information in the middle of the coding processing, and code the difference of the motion model information before and after the update. In the case where the motion model information in which the maximum coding efficiency can be expected varies like the case where average velocity of the car changes according to a period of time in the video in which the road is captured, image coding apparatus 100 can follow the variation to change the motion model used. Therefore, the quality of the generated reference image is improved, so that the quality of the prediction image can be improved.

Thus, image coding apparatus 100 of the first exemplary embodiment codes the plurality of images. Image coding apparatus 100 obtains motion model information 134 indicating the three-dimensional movement of the body in the plurality of images (S101). For example, image coding apparatus 100 extracts motion model information 134 from at least one image included in the plurality of images.

Then, image coding apparatus 100 generates reference image 155 using obtained motion model information 134 (S131). For example, image coding apparatus 100 generates object image 153 by performing the deformation processing on representative image 152 of the body based on motion model information 134, and generates reference image 155 by a combination of object image 153 and background image 154.

For example, motion model information 134 can be expressed as a plurality of coefficients of a high-order transform matrix. Image coding apparatus 100 performs calculation on representative image 152 using the high-order transform matrix, thereby performing the deformation processing. The high-order transform matrix may include a coefficient changing with time.

Then, image coding apparatus 100 refers to generated reference image 155 to code the target image included in the plurality of images (S104 to S106). Specifically, image coding apparatus 100 calculates a difference image that is a difference between the prediction image of generated reference image 155 and the target image, and codes the difference image.

Image coding apparatus 100 can generate the prediction image with a small information amount using motion model information 134, so that the coding efficiency can be improved.

Image coding apparatus 100 calculates the prediction value of the motion vector of the block included in the target image using motion model information 134 (S163), and performs the motion searching processing on the block using the prediction value as the initial value (S152).

Therefore, the time necessary for the motion searching processing can be shortened by setting the initial value of the motion searching processing using motion model information 134.

Image coding apparatus 100 estimates the motion vector of the block included in the target image (S151). Image coding apparatus 100 calculates the prediction motion vector candidate for the block included in the target image using motion model information 134 (S173), and codes a difference between one of the plurality of prediction motion vector candidates including the calculated prediction motion vector candidate and the estimated motion vector (S153).

Therefore, the prediction motion vector candidate is calculated using motion model information 134, so that the coding efficiency can be improved.

SECOND EXEMPLARY EMBODIMENT

Image decoding apparatus 200 and an image decoding method for decoding bit stream 126 generated with image coding apparatus 100 of the first exemplary embodiment will be described in a second exemplary embodiment.

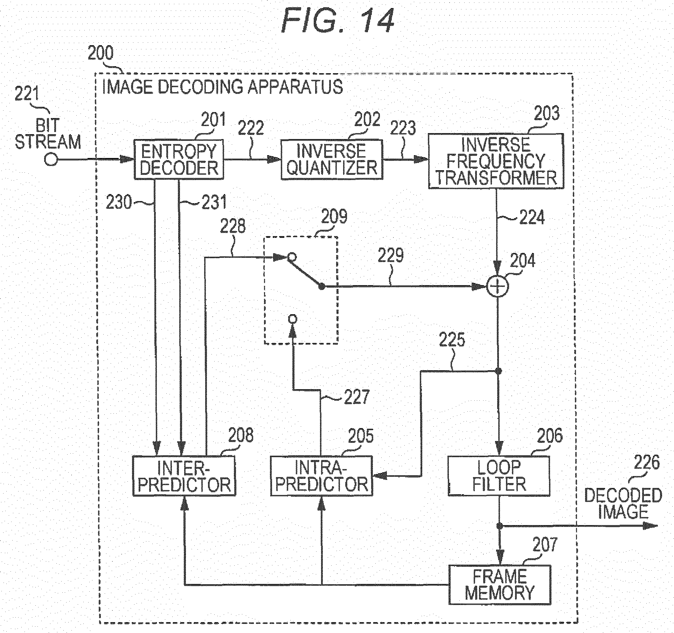

FIG. 14 is a block diagram illustrating an example of image decoding apparatus 200 of the second exemplary embodiment. Image decoding apparatus 200 generates decoded image 226 by decoding bit stream 221. For example, bit stream 221 is bit stream 126 generated with image coding apparatus 100 of the first exemplary embodiment.

Image decoding apparatus 200 includes entropy decoder 201, inverse quantizer 202, inverse frequency transformer 203, adder 204, intra-predictor 205, loop filter 206, frame memory 207, inter-predictor 208, and switch 209.

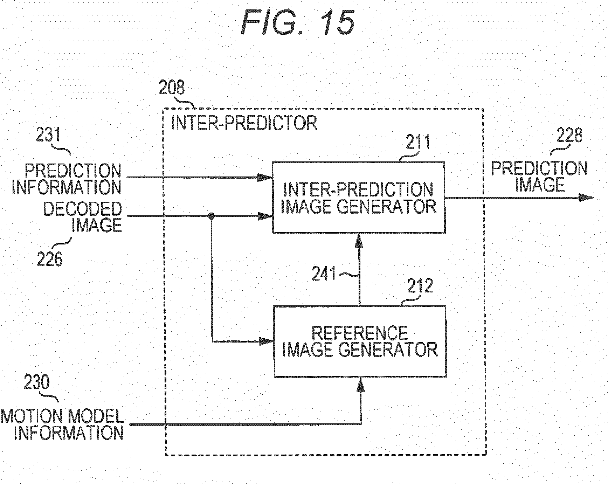

FIG. 15 is a block diagram illustrating a detailed configuration example of inter-predictor 208. Inter-predictor 208 includes reference image generator 212 that generates reference image 241 using motion model information 230 and decoded image 226 and inter-prediction image generator 211 that performs the inter-prediction to generate the prediction image (prediction block 228).

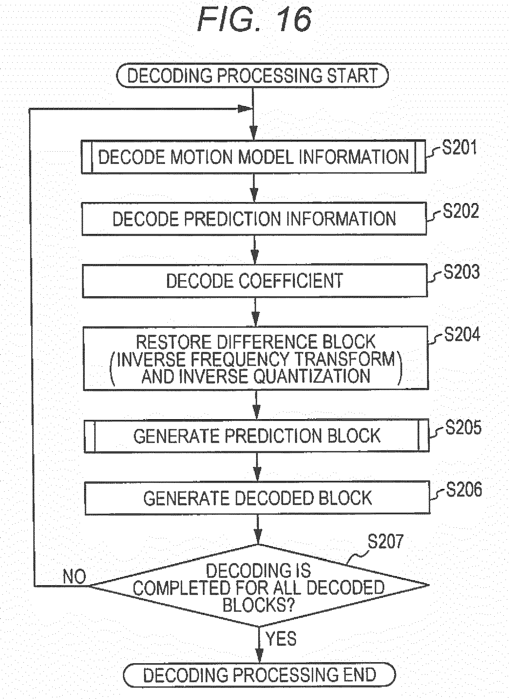

Operation of image decoding apparatus 200 will be described below. FIG. 16 is a flowchart illustrating the image decoding processing performed with image decoding apparatus 200 of the second exemplary embodiment.

Entropy decoder 201 decodes motion model information 230 from bit stream 221 that is generated by coding the still or moving image including at least one picture (S201). Entropy decoder 201 decodes prediction information 231 from bit stream 221 (S202). Entropy decoder 201 decodes coefficient block 222 from bit stream 221 (S203).

Inverse quantizer 202 performs the inverse quantization of coefficient block 222 to generate coefficient block 223. Inverse frequency transformer 203 performs the inverse transform of coefficient block 223 to generate difference block 224 (S204).

Intra-predictor 205 or inter-predictor 208 generates prediction block 229 using at least one of prediction information 231, decoded image 226, and motion model information 230 (S205). Adder 204 adds difference block 224 and prediction block 229 to each other to generate decoded block 225 (S206).

Image decoding apparatus 200 repeatedly performs the series of pieces of processing until the decoding processing is completed with respect to all the blocks included in bit stream 221 (S207). For example, image decoding apparatus 200 makes the determination in step S207 based on whether input bit stream 221 has been ended.

When the decoding processing is completed for the whole of one image, loop filter 206 performs the filter processing for image quality improvement, such as deblocking filtering which relieves the image quality degradation due to the block strain, on a plurality of decoded blocks 225 included in one image, thereby generating decoded image 226. Frame memory 207 stores decoded image 226 therein. Decoded image 226 is used in the inter-prediction processing performed with inter-predictor 208.

There is no limitation to the order of each step in FIG. 16. For example, the motion model information decoding processing (S201) may be performed after the prediction information decoding processing (S202), or the motion model information decoding processing and the prediction information decoding processing may concurrently be performed.

The inverse quantization processing and the inverse frequency transform processing in step S204 may separately and sequentially be performed, or collectively be performed. In the currently mainstream coding standard such as HEVC, the inverse quantization processing and the inverse frequency transform processing are collectively performed. On the decoding side, similarly to the first exemplary embodiment, sometimes expressions such as scaling are used in the pieces of processing.

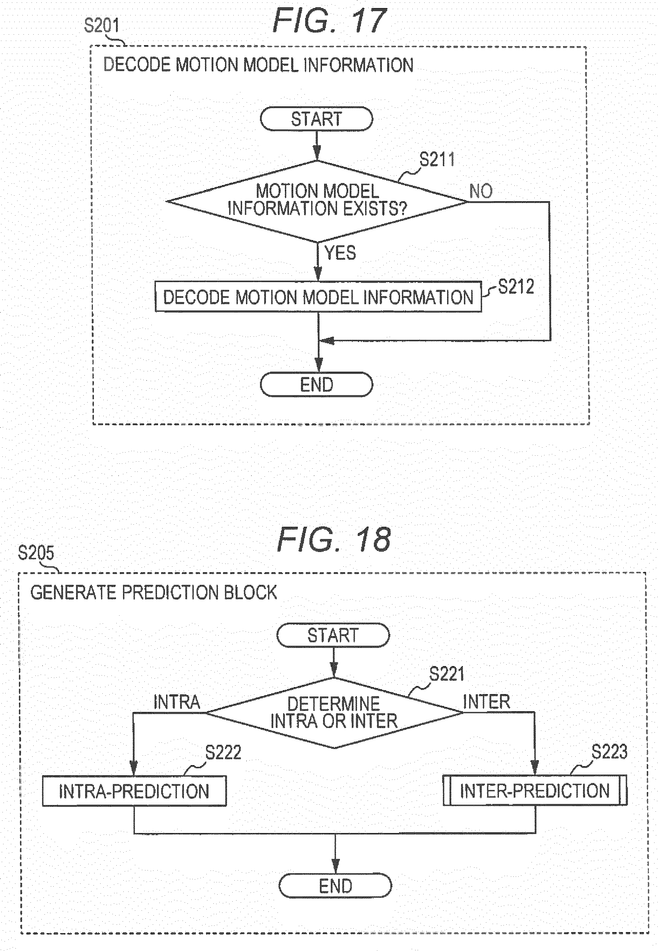

The motion model information decoding processing in step S201 will be described below with reference to a flowchart in FIG. 17.

Entropy decoder 201 determines whether motion model information 230 available in the target frame exists in bit stream 221 (S211). When motion model information 230 does not exist (No in S211), entropy decoder 201 ends the processing in step S201. On the other hand, when motion model information 230 exists (Yes in S211), entropy decoder 201 decodes motion model information 230 (S212).

As used herein, motion model information 230 means information reconstructing the three-dimensional space that can be obtained from the moving image or information indicating an amount of change of the object in the space, such as an amount of change of the size or coordinate of the object existing in the moving image. For example, in the moving image in which a space with depth is captured, the looking way of the object changes such that the object existing on the front side becomes smaller when moving toward the depth direction. Motion model information 230 is the information indicating the change, and is the affine transform matrix or projective transform matrix information in which the change is expressed by each coefficient. The use of motion model information 230 can predict the post-change from the pre-change. Motion model information 230 may be a variable having a time parameter.

For example, in the case where the moving body in a certain area (such as the road) of the moving image has the identical velocity to a certain degree, the projective transform matrix information having a time variable is used as the motion model information in the area on the road. Therefore, the motion of the object in the road region can be expressed by one piece of motion model information 230. Therefore, an information amount necessary for the expression of motion model information 230 can be reduced.

The prediction block generating processing in step S205 will be described below with reference to a flowchart in FIG. 18.

Switch 209 determines whether a prediction technique adopted in the target block is the intra-prediction or the inter-prediction (S221). Specifically, switch 209 makes the determination based on the information included in bit stream 221.

When the prediction technique is determined to be the intra-prediction (Intra in S221), intra-predictor 205 performs the intra-prediction processing (S222). When the prediction technique is determined to be the inter-prediction (Inter in S221), inter-predictor 208 performs the inter-prediction processing (S223).

The intra or inter-prediction determination processing in step S221 is not necessarily performed on each block. For example, in the case where the technique of generating the prediction block of the whole sequence is designated by the information in bit stream 221, only designated one of the techniques in steps S222 and S223 may be adopted. Therefore, the number of determination processing times in the whole decoding processing is decreased, so that the processing amount can be reduced.

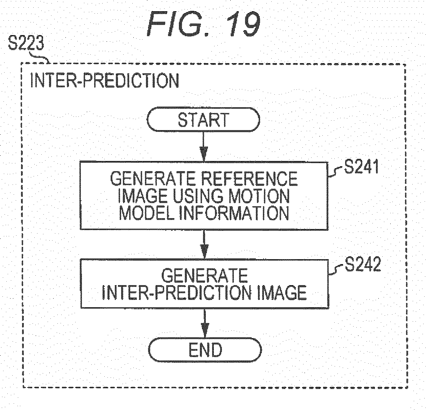

The inter-prediction processing in step S223 will be described below with reference to a flowchart in FIG. 19.

Reference image generator 212 included in inter-predictor 208 generates reference image 241 using motion model information 230 and decoded image 226 (S241). For example, similarly to the processing in step S131 of the first exemplary embodiment, inter-prediction image generator 211 generates reference image 241 using the motion model information 230. As described above, bit stream 221 may include information specifying the background image or representative image. In this case, reference image generator 212 generates reference image 241 using the background image or representative image that is specified by the information.

Reference image generator 212 may generate reference image 241 in a processing block unit without performing the processing of generating reference image 241 in an image unit. Therefore, reference image 241 is generated in a smaller unit compared with the image, so that a capacity of a memory in which reference image 241 is stored can be reduced.

Using the motion information, inter-prediction image generator 211 generates the prediction image (prediction block 228) through the inter-prediction processing adopted in the H.264/AVC scheme or H. 265/HEVC scheme (S242).

Motion model information 230 used in image decoding apparatus 200 needs not to be included in bit stream 221. For example, image decoding apparatus 200 may externally obtain a parameter associated with motion model information 230. For example, when image coding apparatus 100 that generates bit stream 221 input to image decoding apparatus 200 deals with the known video, image decoding apparatus 200 may previously obtain motion model information 230 associated with the video. Therefore, the code amount of bit stream 221 can be reduced.

(Effect)

Image decoding apparatus 200 of the second exemplary embodiment can decode bit stream 221 including motion model information 230. Image decoding apparatus 200 generates reference image 241 using motion model information 230 and decoded image 226, so that the reconstruction of the higher-quality image can be made.

Various modifications of the first exemplary embodiment may be applied to image decoding apparatus 200. For example, in the inter-prediction image generating processing (S242), image decoding apparatus 200 may perform processing corresponding to the processing in FIG. 11. That is, image decoding apparatus 200 derives the prediction motion vector candidate through pieces of processing similar to those in steps S171 to S173. Then, image decoding apparatus 200 selects the prediction motion vector from the plurality of prediction motion vector candidates based on the information included in bit stream 221. Then, image decoding apparatus 200 generates the motion vector by adding a difference motion vector included in bit stream 221 and a selected prediction motion vector to each other. Image decoding apparatus 200 generates the prediction image using the generated motion vector.

Image decoding apparatus 200 also performs decoding processing corresponding to the coding processing of the first exemplary embodiment. Specifically, image decoding apparatus 200 generates various pieces of information by performing processing similar to that of image coding apparatus 100. In the case where the information or information specifying or generating the information is included in bit stream 221, image decoding apparatus 200 uses the information. As used herein, the various pieces of information means information indicating the motion model, the representative image, or the background image or information specifying or generating the motion model, the representative image, or the background image.

As described above, image decoding apparatus 200 of the second exemplary embodiment decodes the plurality of images from bit stream 221. Image decoding apparatus 200 obtains motion model information 230 indicating the three-dimensional movement of the body in the plurality of images (S201). For example, image decoding apparatus 200 obtains motion model information 230 from bit stream 221.

Image decoding apparatus 200 generates reference image 241 using motion model information 230 (S241). For example, image decoding apparatus 200 generates object image 153 by performing the deformation processing on representative image 152 of the body based on motion model information 134, and generates reference image 155 by a combination of object image 153 and background image 154.

For example, motion model information 230 can be expressed as a plurality of coefficients of a high-order transform matrix. Image decoding apparatus 200 performs calculation on representative image 152 using the high-order transform matrix, thereby performing the deformation processing. The high-order transform matrix may include a coefficient changing with time.

Then, image decoding apparatus 200 refers to generated reference image 241 to decode the target image included in the plurality of images (S202 to S206).

Therefore, the use of motion model information 230 generates a prediction image with few information amount, so that the coding efficiency can be improved.

Image decoding apparatus 200 decodes the difference value of the motion vector of the block included in the target image (S203 and S204). Image decoding apparatus 200 calculates the prediction motion vector candidate for the block included in the target image using motion model information 230 (S173), and calculates the motion vector by adding one of the plurality of prediction motion vector candidates including the calculated prediction motion vector candidate and the difference value to each other.

Therefore, the prediction motion vector candidate is calculated using motion model information 230, so that the coding efficiency can be improved.

Although the image coding method and image decoding method of the exemplary embodiments are described above, the present invention is not limited to the exemplary embodiments.

For example, the present invention may be implemented as a content distribution method or a content distribution system for distributing the content subjected to the image coding method. That is, in the content distribution system and the content distribution method, a content distribution request is received, and the content subjected to the image coding method is transmitted based on the content distribution request.

Also, individual processing units included in the above coding apparatus or the decoding apparatus according to the exemplary embodiments are typically implemented as an LSI, which is an integrated circuit. These processing units may be formed as separate chips, or some or all of the processing units may be included in one chip.

Also, the circuit integration is not limited to LSI, and may be implemented using a dedicated circuit or general-purpose processor. An FPGA (Field Programmable Gate Array) that is programmable after manufacturing of an LSI or a reconfigurable processor in which connections and settings of circuit cells within the LSI are reconfigurable may be used.

In the exemplary embodiments described above, individual components may be implemented with dedicated hardware or by executing a software program suitable for the components. The individual components may be implemented as a result of a program executor such as a CPU (Central Processing Unit) or processor loading and executing a software program recorded on a recording medium, such as a hard disk or a semiconductor memory.

In other words, the image coding apparatus and the image decoding apparatus include processing circuitry and a storage that is electrically connected to the processing circuitry (accessible from the control circuit). The processing circuitry includes at least one of dedicated hardware and a program executor. In the case where the processing circuitry includes the program executor, a software program executed with the program executor is stored in the storage. The processing circuitry performs the image coding method or image decoding method of the exemplary embodiments using the storage.

Further, the exemplary embodiments of the present invention may be implemented by a software program or a non-transitory computer-readable recording medium storing the program thereon. Obviously, the program can be distributed via a transmission medium such as the Internet.

Also, numerical values used above are merely illustrative ones used to describe the embodiments of the present invention specifically, and thus the present invention is not limited to the illustrative numerical values.

Also, how functional blocks are divided in block diagrams is merely an example, and thus a plurality of functional blocks may be implemented as one functional block, one functional block may be divided into a plurality of functional blocks, or part of the function may be transferred to another functional block. Also, functions of a plurality of functional blocks having similar functions may be processed in parallel or in a time-divided manner by using hardware or software.

Also, the order in which steps included in the above image coding method or image decoding method are executed is merely an illustrative one used to describe the exemplary embodiments of the present invention specifically, and thus the steps may be executed in an order other than the above order. Also, some of the above steps may be executed simultaneously (in parallel) with another step.

Although the image coding apparatus, the image decoding apparatus, the image coding method, and the image decoding method according to one or a plurality of aspects of the present invention have been described above based on the exemplary embodiments, the present invention is not limited to the exemplary embodiments. Embodiments in which various modifications conceivable by a person skilled in the art are made and embodiments that are made by combining elements of different embodiments may also be within the scope of the one or the plurality of embodiments of the present invention as long as such embodiments do not depart from the gist of the present invention.

THIRD EXEMPLARY EMBODIMENT

The processing described in each of the exemplary embodiments above can be implemented easily in a standalone computer system by recording a program for implementing the configuration of a video coding method (image coding method) or video decoding method (image decoding method) described in each exemplary embodiment on a storage medium. The storage medium may be any given type of medium capable of storing the program, such as a magnetic disk, an optical disc, a magneto-optical disk, an IC (Integrated Circuit) card, or a semiconductor memory.

Now, exemplary applications of the video coding method (image coding method) or the video decoding method (image decoding method) described in each of the exemplary embodiments and systems using them will be further described. The systems include an image coding/decoding apparatus which includes an image coding apparatus that employs the image coding method and an image decoding apparatus that employs the image decoding method. Other configurations of the systems can be changed as appropriate in accordance with the circumstances.

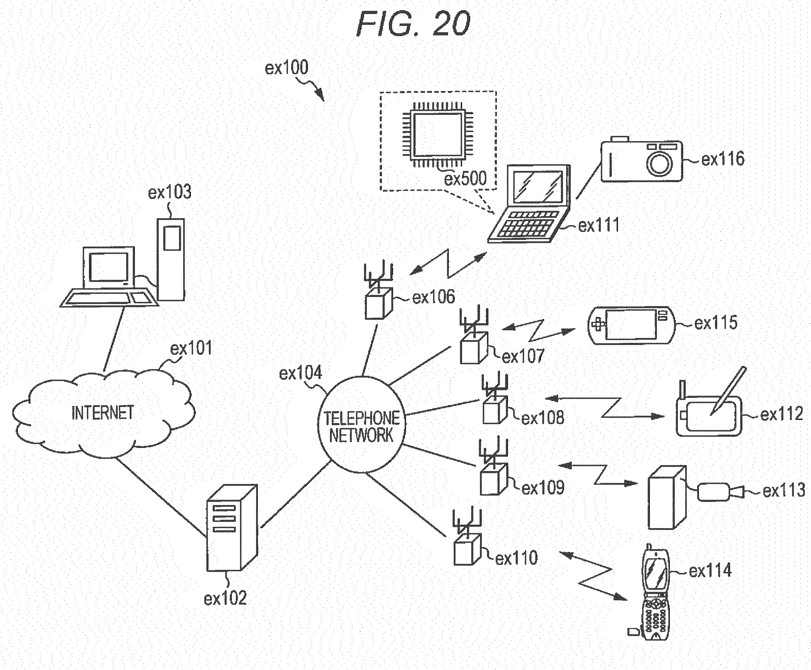

FIG. 20 is a diagram illustrating an overall configuration of content providing system ex100 that implements content distribution services. An area in which communication services are provided is divided into cells of a desired size. Base stations ex106, ex107, ex108, ex109, and ex110, which are fixed wireless stations, are installed in the respective cells.

In this content providing system ex100, various devices, such as computer ex111, PDA (Personal Digital Assistant) ex112, camera ex113, mobile phone ex114, game machine ex115 are connected to Internet ex101 via Internet service provider ex102, telephone network ex104, and base stations ex106 to ex110.

Note that the configuration of content providing system ex100 is not limited to the configuration illustrated in FIG. 20, and any given combination of the elements may be connected. Also, the individual devices may be directly connected to telephone network ex104 instead of via base stations ex106 to ex110 which are fixed wireless stations. Alternatively, the individual devices may be directly interconnected via near field communication or the like.

Camera ex113 is a device capable of capturing moving images, such as a digital camcorder. Camera ex116 is a device capable of capturing still images and moving images, such as a digital camera. Also, mobile phone ex114 may be any of a mobile phone based on the GSM (registered trademark) (Global System for Mobile Communications) scheme, CDMA (Code Division Multiple Access) scheme, W-CDMA (Wideband-Code Division Multiple Access) scheme, LTE (Long Term Evolution) scheme, or HSPA (High Speed Packet Access) scheme; a PHS (Personal Handyphone System); and so forth.

In content providing system ex100, camera ex113 or the like is connected to streaming server ex103 via base station ex109 and telephone network ex104. In this way, live streaming is implemented. During live streaming, the coding processing is performed on content (for example, video of a music event) obtained by the user using camera ex113 in a manner as described in each of the above-described exemplary embodiments (that is, camera ex113 functions as an image coding apparatus according to one aspect of the present invention) and the resulting content is transmitted to streaming server ex103. Streaming server ex103 in turn distributes the received content as a stream to a client that has made a request. Examples of the client include computer ex111, PDA ex112, camera ex113, mobile phone ex114, and game machine ex115 capable of decoding the data that has undergone the coding processing. Each device that has received the distributed data performs the decoding processing on the received data to reproduce the data (that is, the device functions as an image decoding apparatus according to one aspect of the present invention).

Note that the coding processing may be performed on the obtained data by camera ex113, by streaming server ex103 that performs data transmission processing, or by both of them on a processing-sharing basis. Similarly, the decoding processing may be performed on the distributed data by the client, by streaming server ex103, or by both of them on a processing-sharing basis. Also, in addition to still and/or moving image data obtained by camera ex113, still and/or moving image data obtained by camera ex116 may be transmitted to streaming server ex103 via computer ex111. In this case, the coding processing may be performed by any of camera ex116, computer ex111, and streaming server ex103, or by all of them on a processing-sharing basis.

The coding processing and the decoding processing are performed in general by LSI ex500 included in computer ex111 or each device. LSI ex500 may be formed as a single chip or a plurality of chips. Alternatively, software for video coding/decoding may be recorded on a recording medium (such as a CD-ROM, a flexible disk, or a hard disk) that is readable by computer ex111 or the like, and the coding processing and the decoding processing may be performed using the software. Further, in the case where mobile phone ex114 is equipped with a camera, moving image data obtained with the camera may be transmitted. This moving image data is data that has been coded by LSI ex500 included in mobile phone ex114.

Also, streaming server ex103 may be constituted by a plurality of servers or a plurality of computers that process, record, and distribute data in a distributed manner.

In the above-described manner, content providing system ex100 allows the client to receive and reproduce coded data. Accordingly, content providing system ex100 allows the client to receive, decode, and reproduce information transmitted by a user in real time, and thus allows a user not having a special right or equipment to implement personal broadcasting.

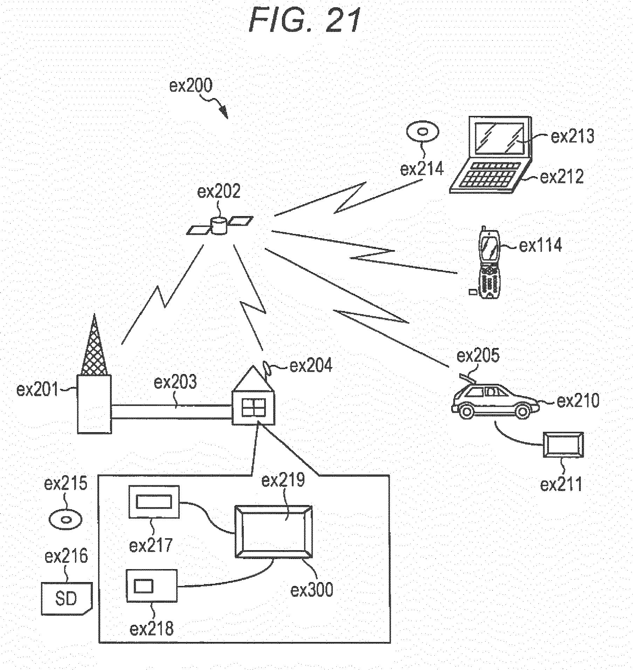

In addition to the example of content providing system ex100, at least one of the video coding apparatus (image coding apparatus) and the video decoding apparatus (image decoding apparatus) according to each of the above-described exemplary embodiments can be incorporated in digital broadcasting system ex200 as illustrated in FIG. 21. Specifically, broadcasting station ex201 transmits a radio wave of multiplexed data obtained by multiplexing video data, music data, and the like, via communication to broadcasting satellite ex202. This video data is data coded using the video coding method described in each of the above-described exemplary embodiments (that is, data coded by the image coding apparatus according to one aspect of the present invention). Upon receipt of this data, broadcasting satellite ex202 transmits a broadcasting radio wave, and home antenna ex204 capable of receiving satellite broadcasting receives this radio wave. An apparatus such as television (receiver) ex300 or set top box (STB) ex217 decodes and reproduces the received multiplexed data (that is, the apparatus functions as the image decoding apparatus according to one aspect of the present invention).

Also, the video decoding apparatus or the video coding apparatus described in each of the above-described exemplary embodiments can be implemented in reader/recorder ex218 that reads and decodes the multiplexed data recorded on recording medium ex215 such as a DVD (Digital Versatile Disc) or a BD (Blu-ray Disc); or that codes a video signal and further multiplexes a music signal with the video signal depending on circumstances, and writes the resulting signal on recording medium ex215. In this case, the reproduced video signal is displayed on monitor ex219, and the video signal can be reproduced by another apparatus or system using recording medium ex215 having the multiplexed data recorded thereon. Alternatively, the video decoding apparatus may be implemented in set top box ex217 connected to cable ex203 for cable television or home antenna ex204 for satellite/terrestrial broadcasting, and the video signal may be displayed on monitor ex219 of television ex300. At this time, the video decoding apparatus may be incorporated into television ex300 instead of set top box ex217.

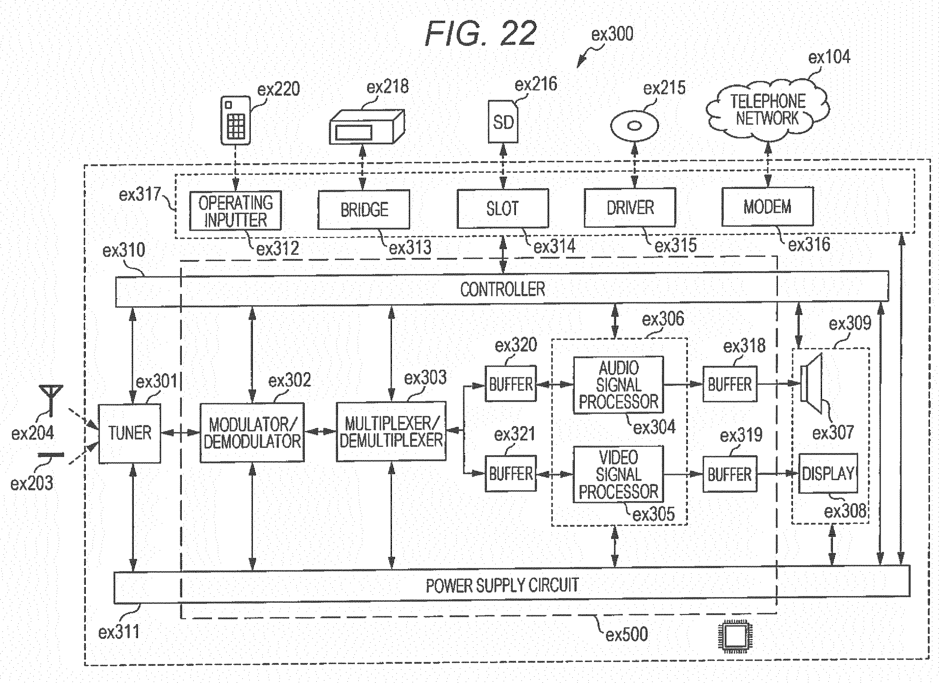

FIG. 22 is a diagram illustrating television (receiver) ex300 that employs the video decoding method and the video coding method described in each of the exemplary embodiments above. Television ex300 includes tuner ex301 that obtains or outputs, via antenna ex204 or cable ex203 that receives broadcasting, multiplexed data in which video data and audio data are multiplexed together; modulator/demodulator ex302 that performs demodulation on the received multiplexed data or modulation on multiplexed data to be transmitted to outside; and multiplexer/demultiplexer ex303 that demultiplexes the demodulated multiplexed data into video data and audio data, or multiplexes video data and audio data that have been coded by signal processor ex306.

Television ex300 also includes signal processor ex306 and outputter ex309. Signal processor ex306 includes audio signal processor ex304 that decodes or codes audio data, and video signal processor ex305 that decodes or codes video data (video signal processor ex305 functions as the image coding apparatus or the image decoding apparatus according to one aspect of the present invention). Outputter ex309 includes speaker ex307 that outputs the decoded audio signal, and display ex308, such as a display, that displays the decoded video signal. Television ex300 further includes interface ex317 which includes operation inputter ex312 that accepts input of a user operation. Television ex300 further includes controller ex310 that controls the individual units in an integrated manner, and power supply circuit ex311 that supplies electric power to the individual units. Interface ex317 may include bridge ex313 to be connected to an external device, such as reader/recorder ex218; slot ex314 that enables connection of recording medium ex216 such as an SD card; driver ex315 for connection to external recording medium ex215, such as a hard disk; and modem ex316 for connection to telephone network ex104 as well as operation inputter ex312. Note that recording medium ex216 is capable of electrically storing information by using a nonvolatile/volatile semiconductor memory included therein. The individual units of television ex300 are connected to one another via a synchronization bus.

First, a configuration that allows television ex300 to decode and reproduce multiplexed data obtained from outside with antenna ex204 or the like will be described. Television ex300 receives a user operation from remote control ex220 or the like. Based on control performed by controller ex310 including a CPU or the like, multiplexer/demultiplexer ex303 demultiplexes multiplexed data that has been demodulated by modulator/demodulator ex302. Further, in television ex300, audio signal processor ex304 decodes the separated audio data and video signal processor ex305 decodes the separated video data by using the image decoding method described in each of the above exemplary embodiments. Further, the decoded audio signal and video signal are output to outside from outputter ex309. When the audio signal and the video signal are output, these signals may be temporarily stored in buffers ex318 and ex319 or the like so that they are reproduced in synchronization with each other. Also, television ex300 may read multiplexed data from recording media ex215 and ex216 such as a magnetic/optical disc and an SD card as well as from broadcasting. Next, a configuration that allows television ex300 to code an audio signal and a video signal and to transmit the resulting signals to outside or write the resulting signals on a recording medium or the like will be described. Television ex300 receives a user operation from remote control ex220 or the like. Based on control performed by controller ex310, audio signal processor ex304 codes the audio signal, and video signal processor ex305 codes the video signal by using the image coding method described in each of the above exemplary embodiments. The coded audio signal and video signal are multiplexed by multiplexer/demultiplexer ex303 and the resulting multiplexed signal is output to outside. When the audio signal and the video signal are multiplexed, these signals may be temporarily stored in buffers ex320 and ex321 or the like so that they are synchronized with each other. Note that a plurality of buffers may be provided as illustrated as buffers ex318, ex319, ex320, and ex321; or one or more buffers may be shared. Further, in addition to the illustrated buffers, for example, data may be stored in a buffer that serves as a buffering member for avoiding an overflow or underflow in the system between modulator/demodulator ex302 and multiplexer/demultiplexer ex303 or the like.

Television ex300 may also include a configuration for receiving audio/video input of a microphone or a camera in addition to the configuration for obtaining audio data and video data from broadcasting, a recording medium, or the like; and may perform the coding processing on the data obtained therefrom. Although television ex300 has been described as the configuration capable of performing the above-described coding processing, multiplexing, and outputting to outside, television ex300 may be a configuration incapable of performing these pieces of processing and only capable of the reception, decoding processing, and outputting to outside.

In the case where multiplexed data is read from and written to a recording medium by reader/recorder ex218, the decoding processing or the coding processing may be performed by television ex300, by reader/recorder ex218, or by both television ex300 and reader/recorder ex218 on a processing-sharing basis.

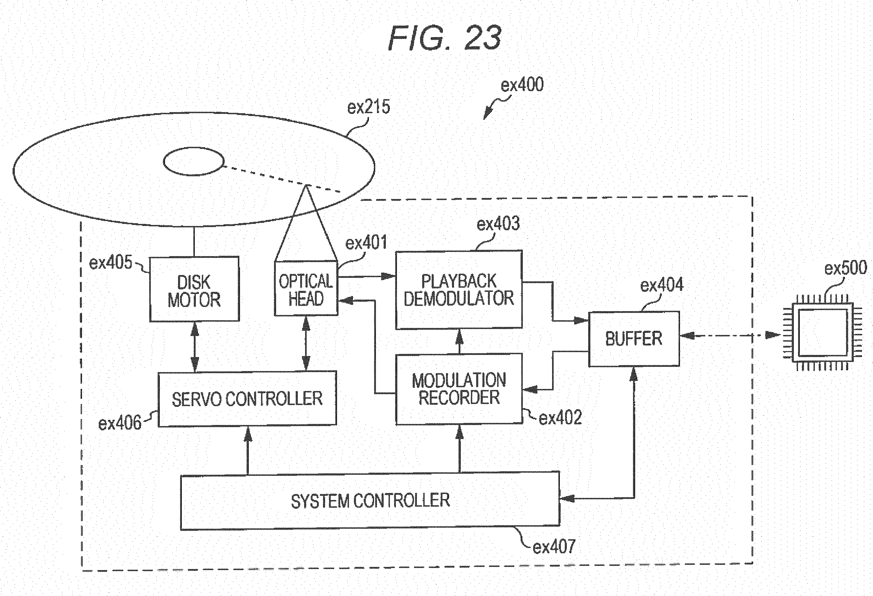

FIG. 23 illustrates an example of a configuration of information reproducer/recorder ex400 in the case of reading data from and writing data to an optical disc. Information reproducer/recorder ex400 includes optical head ex401, modulation recorder ex402, reproduction demodulator ex403, buffer ex404, disc motor ex405, survo controller ex406, and system controller ex407. Optical head ex401 irradiates a recording surface of recording medium ex215, which is an optical disc, with a laser spot to write information thereon; and detects reflected light from the recording surface of recording medium ex215 to read information. Modulation recorder ex402 electrically drives a semiconductor laser included in optical head ex401 to modulate a laser beam in accordance with to-be-recorded data. Reproduction demodulator ex403 amplifies a reproduced signal which is obtained by electrically detecting reflected light from the recording surface by a photodetector included in optical head ex401, separates and demodulates signal components recorded on recording medium ex215, and reproduces necessary information. Buffer ex404 temporarily stores information to be recorded on recording medium ex215 and information reproduced from recording medium ex215. Disc motor ex405 rotates recording medium ex215. Survo controller ex406 moves optical head ex401 to a certain information track while controlling rotational driving of disc motor ex405 to perform laser spot tracking processing. System controller ex407 controls information reproducer/recorder ex400. The above-described reading processing and writing processing are implemented as a result of system controller ex407 performing recording/reproduction of information via optical head ex401 while causing modulation recorder ex402, reproduction demodulator ex403, and survo controller ex406 to operate in cooperation with one another and using various pieces of information held in buffer ex404 and generating/adding new information as needed. System controller ex407 includes, for example, a microprocessor and performs the pieces of processing by executing a read/write program.

Although optical head ex401 that irradiates the recording surface with a laser spot has been described above, optical head ex401 may include a configuration for performing high-density recording using near field light.

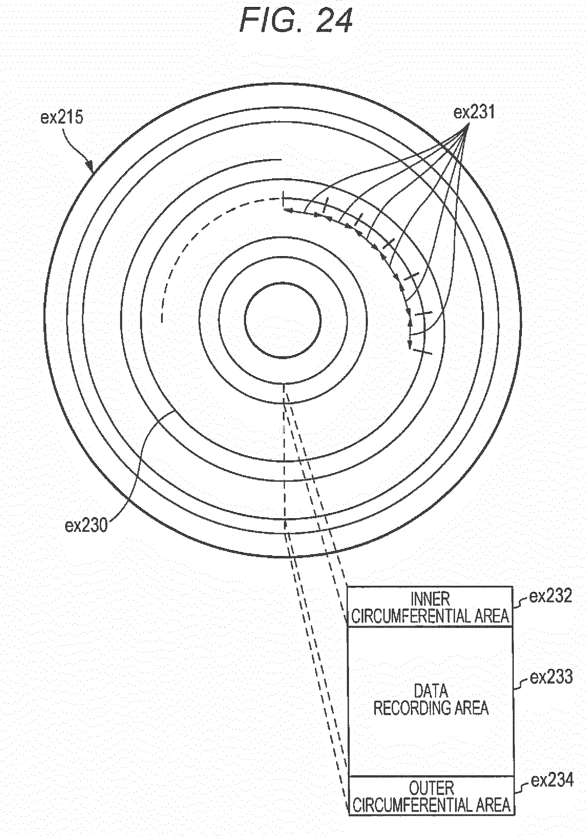

FIG. 24 is a schematic diagram of recording medium ex215 which is an optical disc. On the recording surface of recording medium ex215, a guide groove (groove) is spirally formed. In information track ex230, address information that represents an absolute position on the disc is pre-recorded by a change in the shape of the groove. This address information includes information identifying positions of recording blocks ex231 which are units in which data is recorded. A recording/reproducing apparatus can identify a recording block by reproducing information track ex230 and reading the address information. Also, recording medium ex215 includes data recording area ex233, inner circumference area ex232, and outer circumference area ex234. Data recording area ex233 is an area used for recording user data. Inner circumference area ex232 and outer circumference area ex234 that are located on the inner side and the outer side of data recording area ex233, respectively, are used for purposes other than recording of user data. Information reproducer/recorder ex400 performs reading/writing of coded audio data, coded video data, or multiplexed data of these pieces of data on data recording area ex233 of recording medium ex215 thus configured.

The description has been given using a single-layer optical disc such as a DVD or BD by way of example above, the optical disc used is not limited to such a disc and may be a multi-layered optical disc for which recording can be performed on part other than the surface. Alternatively, the optical disc used may be an optical disc on which multi-dimensional recording/reproduction can be performed by recording information at the same position of the disc using light of various waveforms different from one another, by recording information on different layers at various angles, or the like.

In addition, in digital broadcasting system ex200, data may be received by vehicle ex210 equipped with antenna ex205 from broadcasting satellite ex202 or the like and a moving image may be reproduced on a display device of car navigation system ex211 mounted on vehicle ex210. Note that the configuration illustrated in FIG. 22 additionally including a GPS receiver is conceivable as the configuration of car navigation system ex211, and the same applies to computer ex111, mobile phone ex114, or the like.

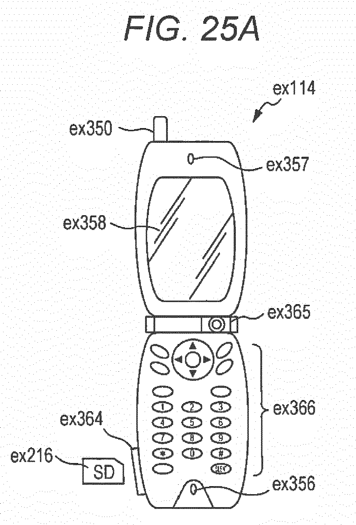

FIG. 25A is a diagram illustrating mobile phone ex114 that employs the video decoding method and the video coding method described in the above exemplary embodiments. Mobile phone ex114 includes antenna ex350 that transmits and receives a radio wave to and from base station ex110; camera ex365 capable of capturing video and still images; and display ex358, such as a liquid crystal display, that displays the video captured by camera ex365 and data obtained by decoding video or the like received with antenna ex350. Mobile phone ex114 further includes a body including operation key ex366; audio outputter ex357 such as a speaker for outputting audio; audio inputter ex356 such as a microphone for inputting audio; memory ex367 that stores coded data or decoded data of captured video, captured still images, recorded audio, received video, received still images, or received emails; and slot ex364 which is an interface to a recording medium which similarly stores data thereon.

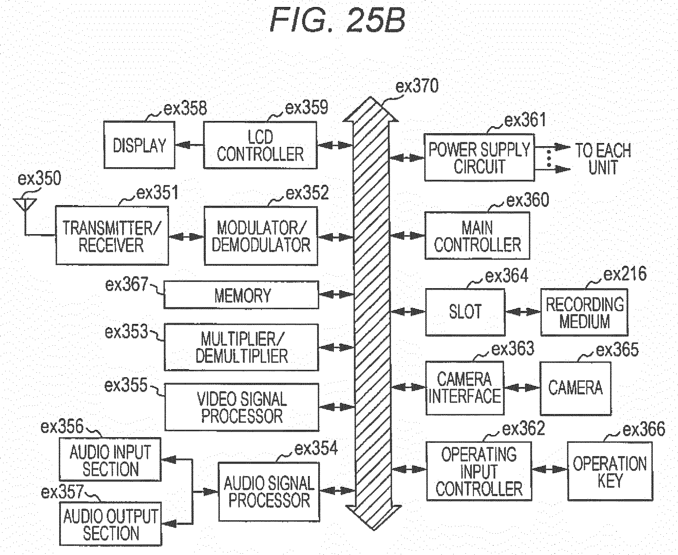

Further, an example of a configuration of mobile phone ex114 will be described with reference to FIG. 25B. Mobile phone ex114 includes main controller ex360 that controls individual units of the body which includes display ex358 and operation key ex366 in an integrated manner. Mobile phone ex114 also includes power supply circuit ex361, operation input controller ex362, video signal processor ex355, camera interface ex363, LCD (Liquid Crystal Display) controller ex359, modulator/demodulator ex352, multiplexer/demultiplexer ex353, audio signal processor ex354, slot ex364, and memory ex367 which are connected to main controller ex360 via bus ex370.

When an on-hook/power key is turned on through a user operation, power supply circuit ex361 supplies electric power to individual units from a battery pack to activate mobile phone ex114 into an operable state.

In mobile phone ex114, in a voice call mode, audio signal processor ex354 converts an audio signal obtained by audio inputter ex356 into a digital audio signal, modulator/demodulator ex352 performs spread spectrum processing on this digital audio signal, and transmitter/receiver ex351 performs digital-to-analog conversion processing and frequency conversion processing on this signal and then transmits the resulting signal via antenna ex350 in accordance with control performed by main controller ex360 which includes a CPU, a ROM, and a RAM. Also, in mobile phone ex114, in the voice call mode, transmitter/receiver ex351 amplifies reception data received via antenna ex350 and performs frequency conversion processing and analog-to-digital conversion processing, modulator/demodulator ex352 performs spread spectrum processing on the resulting signal, audio signal processor ex354 converts the resulting signal into an analog audio signal. The analog audio signal is then output from audio outputter ex357.

In the case where an email is transmitted in a data communication mode, text data of the email input through operation of operation key ex366 of the body or the like is sent to main controller ex360 via operation input controller ex362. Main controller ex360 performs control such that modulator/demodulator ex352 performs spread spectrum processing on the text data and transmitter/receiver ex351 performs digital-to-analog conversion processing and frequency conversion processing on the text data and then transmits the resulting text data to base station ex110 via antenna ex350. In the case of receiving an email, substantially the opposite processing is performed on the received data, and the resulting text data is output to display ex358.

In the case where video, a still image, or a combination of video and audio are transmitted in the data communication mode, video signal processor ex355 compresses and codes a video signal supplied from camera ex365 by using the video coding method described in each of the above exemplary embodiments (that is, video signal processor ex355 functions as the image coding apparatus according to one aspect of the present invention), and sends the coded video data to multiplexer/demultiplexer ex353. Also, audio signal processor ex354 codes an audio signal obtained by audio inputter ex356 while the video, still image, or the like is being captured by camera ex365, and sends the coded audio data to multiplexer/demultiplexer ex353.

Multiplexer/demultiplexer ex353 multiplexes the coded video data supplied from video signal processor ex355 and the coded audio data supplied from audio signal processor ex354 in accordance with a certain scheme. Modulator/demodulator (modulation/demodulation circuit) ex352 performs spread spectrum processing on the resulting multiplexed data. Transmitter/receiver ex351 performs digital-to-analog conversion processing and frequency conversion processing on the multiplexed data, and then transmits the resulting data via antenna ex350.

In the case of receiving data of a moving image file linked to a website or the like or an email attached with video or audio in the data communication mode, multiplexer/demultiplexer ex353 demultiplexes multiplexed data into a bitstream of video data and a bitstream of audio data in order to decode the multiplexed data received via antenna ex350. Multiplexer/demultiplexer ex353 supplies the coded video data to video signal processor ex355 and the coded audio data to audio signal processor ex354 via synchronization bus ex370. Video signal processor ex355 performs decoding using a video decoding method corresponding to the video coding method described in each of the above exemplary embodiments to decode the video signal (that is, video signal processor ex355 functions as the image decoding apparatus according to one aspect of the present invention). Then, for example, video or still image included in the moving image file linked to the website is displayed on display ex358 via LCD controller ex359. Also, audio signal processor ex354 decodes the audio signal, and the resulting audio is output by audio outputter ex357.

Like television ex300, three implementation forms, that is, a transmission/reception terminal including both an encoder and a decoder, a transmission terminal only including an encoder, and a reception terminal only including a decoder, are conceivable for a terminal such as mobile phone ex114. Further, the case has been described in which multiplexed data in which video data, audio data, and so forth are multiplexed is received and transmitted in digital broadcasting system ex200; however, the multiplexed data may be data in which text data related to the video is multiplexed other than audio data or video data alone may be used instead of the multiplexed data.

As described above, the video coding method or the video decoding method described in each of the above exemplary embodiments is applicable to any of the aforementioned devices and systems. In such a way, advantages described in each of the above exemplary embodiments can be obtained.

Also, the present invention is not limited to the exemplary embodiments above, and various modifications and corrections can be made without departing from the scope of the present invention.

FOURTH EXEMPLARY EMBODIMENT

Video data can also be generated by switching between the video coding method or apparatus described in each of the above exemplary embodiments and a video coding method or apparatus based on a different standard, such as MPEG-2, MPEG-4 AVC, or VC-1 as appropriate.

In the case where a plurality of pieces of video data based on different standards are generated, a decoding method corresponding to each of the standards needs to be selected at the time of decoding. However, because which standard the to-be-decoded video data is based on is not identifiable, it is challenging to select an appropriate decoding method.

To deal with such a challenge, multiplexed data in which audio data or the like is multiplexed with video data is configured to include identification information that indicates which standard the video data is based on. A specific structure of multiplexed data including video data that is generated using the video coding method or apparatus described in each of the above exemplary embodiments will be described below. Multiplexed data is a digital stream in the MPEG-2 transport stream formant.

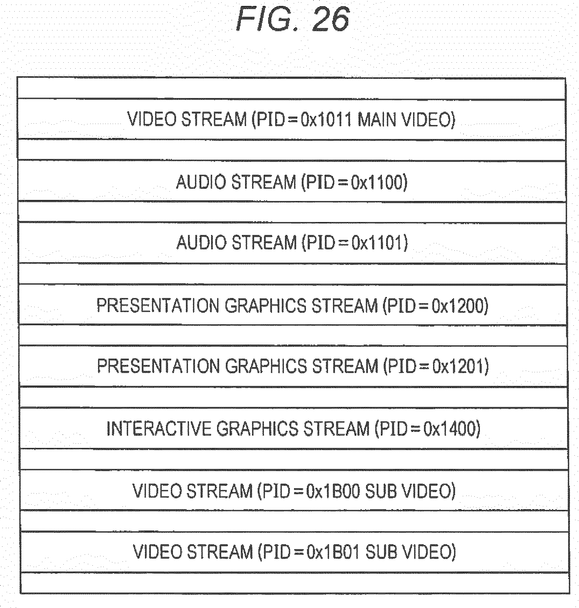

FIG. 26 is a diagram illustrating a structure of multiplexed data. As illustrated in FIG. 26, multiplexed data is obtained by multiplexing one or more of a video stream, an audio stream, a presentation graphics stream (PG), and an interactive graphics stream. The video stream represents a main video and a sub video of a movie. The audio stream (IG) represents a main audio part of the movie and sub audio to be mixed with the main audio. The presentation graphics stream represents the subtitle of the movie. Here, the main video refers to a video usually displayed on a window, whereas the sub video refers to a video displayed within the main video as a small window. The interactive graphics stream represents a dialog window created by placing GUI components on the window. The video stream is coded using the video coding method or apparatus described in each of the above exemplary embodiments and using the video coding method or apparatus compliant with an existing standard, such as MPEG-2, MPEG-4 AVC, or VC-1. The audio stream is coded using a standard, such as Dolby AC-3 (Audio Code number 3), Dolby Digital Plus, MLP (Meridian Lossless Packing), DTS (Digital Theater Systems), DTS-HD, or linear PCM (Pulse Code Modulation).

Each stream included in multiplexed data is identified by a PID (Packet Identifier). For example, a video stream to be used as video of a movie is assigned Ox1011. An audio stream is assigned any one of 0x1100 to 0x111F. A presentation graphics stream is assigned any one of 0x1200 to 0x121F. An interactive graphics stream is assigned any one of 0x1400 to 0x141F. A video stream to be used as sub video of the movie is assigned any one of 0x1B00 to 0x1B1F. An audio stream to be used as sub audio to be mixed with main audio is assigned any one of 0x1A00 to 0x1A1F.

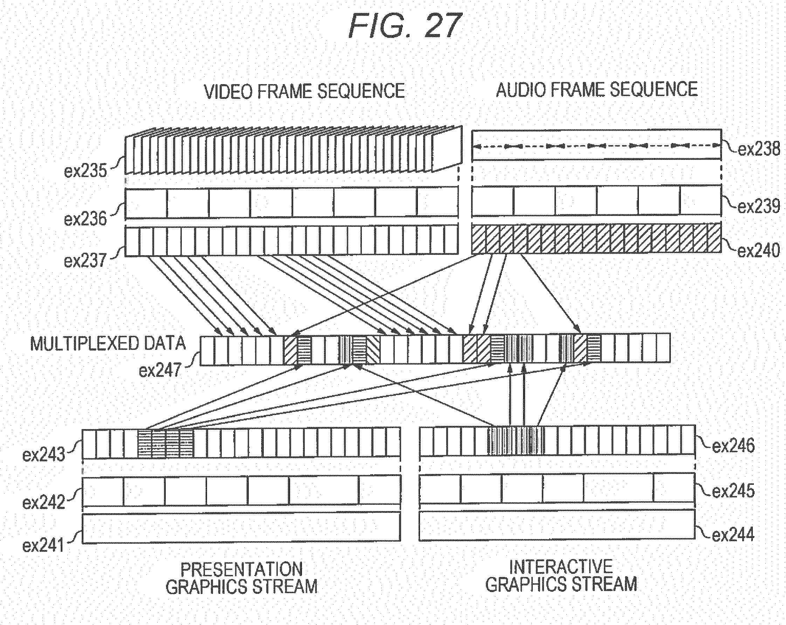

FIG. 27 is a diagram schematically illustrating how individual streams are multiplexed into multiplexed data. Video stream ex235 made up of a plurality of video frames and audio stream ex238 made up of a plurality of audio frames are converted into PES (Packetized Elementary Stream) packet sequences ex236 and ex239, and then into TS (Transport Stream) packets ex237 and ex240, respectively. Likewise, data of presentation graphics stream ex241 and data of interactive graphics stream ex244 are converted into PES packet sequences ex242 and ex245, and further into TS packets ex243 and ex246, respectively. Multiplexed data ex247 is formed by multiplexing these TS packets into one stream.

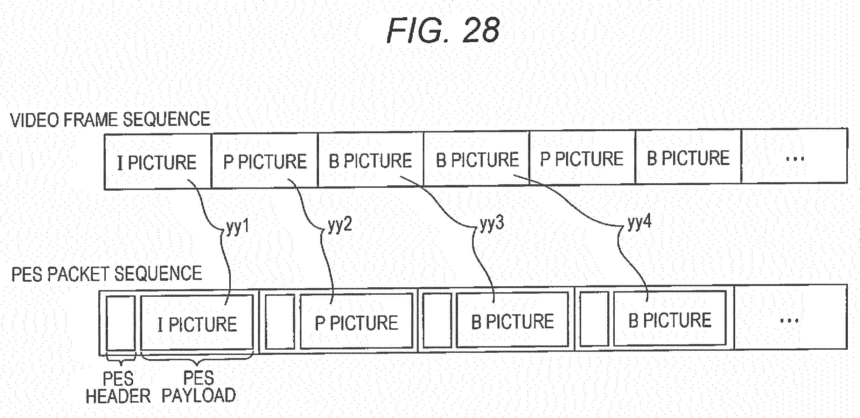

FIG. 28 illustrates how a video stream is stored in a PES packet sequence in detail. The upper row in FIG. 28 illustrates a video frame sequence of the video stream. The lower row illustrates a PES packet sequence. As denoted by arrows yy1, yy2, yy3, and yy4 in FIG. 28, I (intra)-pictures, B (bidirectional)-pictures, and P (predicted)-pictures which are a plurality of video presentation units in a video stream are separated on a picture-by-picture basis, and are stored in the payload of respective PES packets. Each PES packet includes a PES header in which PTS (Presentation Time-Stamp) that represents display time of the picture and DTS (Decoding Time-Stamp) that represents decoding time of the picture are stored.

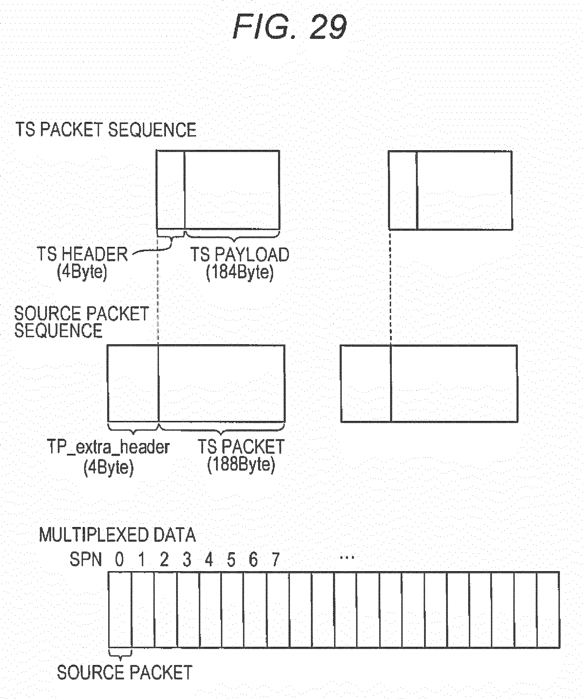

FIG. 29 illustrates the format of TS packets which are ultimately written in multiplexed data. A TS packet is a 188-byte fixed-length packet made up of a 4-byte TS header which includes information such as PID for identifying a stream, and a 184-byte TS payload which stores data. A PES packet is divided into portions, and these portions are stored in respective TS payloads. In the case of BD-ROM, a TS packet is attached with a 4-byte TP_Extra_Header to form a 192-byte source packet, and the source packet is written in the multiplexed data. The TP_Extra_Header includes information such as ATS (Arrival_Time_Stamp). The ATS represents the transfer start time at which transfer of the TS packet to a PID filter of a decoder is to be started. As illustrated by the lowest row in FIG. 29, source packets are arranged in the multiplexed data. The number that is incremented from the start of the multiplexed data is called SPN (Source Packet Number).

TS packets included in the multiplexed data include a PAT (Program Association Table), a PMT (Program Map Table), and a PCR (Program Clock Reference) in addition to individual streams of video, audio, subtitle, and so forth. The PAT represents the PID of the PMT used in the multiplexed data, and 0 is registered as the PID of the PAT. The PMT includes PIDs of individual streams of video, audio, subtitle, and so forth included in the multiplexed data; pieces of attribute information of the streams corresponding to the individual PIDs; and various descriptors regarding the multiplexed data. Examples of the descriptors include copy control information that indicates whether or not copying of the multiplexed data is permitted. The PCR includes information regarding STC (System Time Clock) time corresponding to the ATS at which the PCR packet is transferred to a decoder in order to achieve synchronization between ATC (Arrival Time Clock) which is the time axis for ATS and STC (System Time Clock) which is the time axis for PTS and DTS.

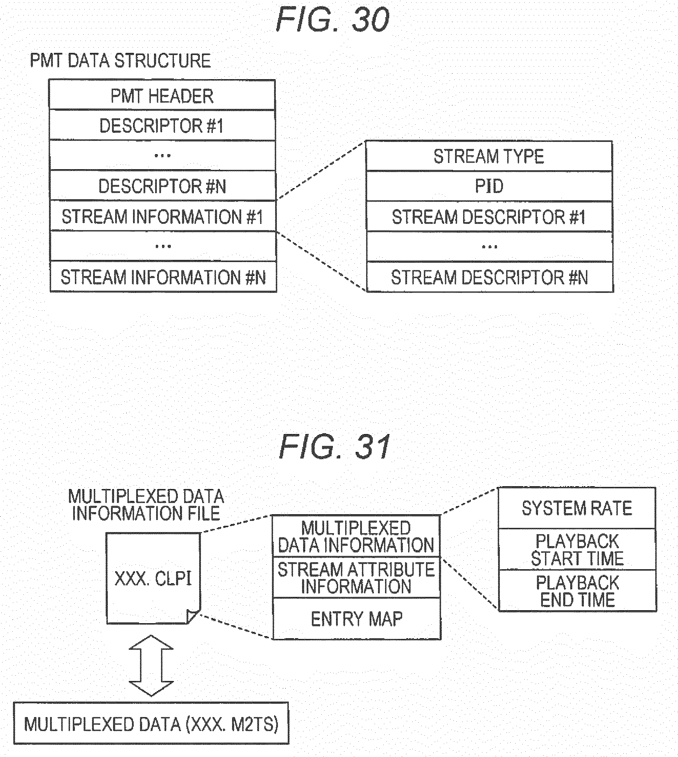

FIG. 30 is a diagram that describes the data structure of the PMT in detail. At the start of the PMT, a PMT header which describes the length of data included in the PMT is placed. The PMT header is followed by a plurality of descriptors regarding the multiplexed data. The copy control information and so forth are described as the descriptors. The descriptors are followed by a plurality of pieces of stream information regarding individual streams included in the multiplexed data. The stream information is made up of a stream type for identifying the compression codec of the stream or the like, the PID of the stream, and stream descriptors that describe the attribute information (such as a frame rate and an aspect ratio) of the stream. The PMT includes as many stream descriptors as the number of streams included in the multiplexed data.

In the case where the multiplexed data is recorded on a recording medium or the like, the multiplexed data is recorded together with a multiplexed data information file.

As illustrated in FIG. 31, a multiplexed data information file (clip information file) contains management information of the multiplexed data, has one-to-one correspondence with the multiplexed data, and is made up of multiplexed data information (clip information), stream attribute information, and an entry map.

The multiplexed data information (clip information) is made up of the system rate, the playback start time, and the playback end time as illustrated in FIG. 31. The system rate represents the maximum transfer rate at which the multiplexed data is transferred to the PID filter of a system target decoder (described later). Intervals of the ATS included in the multiplexed data are set to be lower than or equal to the system rate. The playback start time represents the PTS of the first video frame of the multiplexed data. As the playback end time, a result obtained by adding a playback duration of one frame to the PTS of the last video frame of the multiplexed data is set.

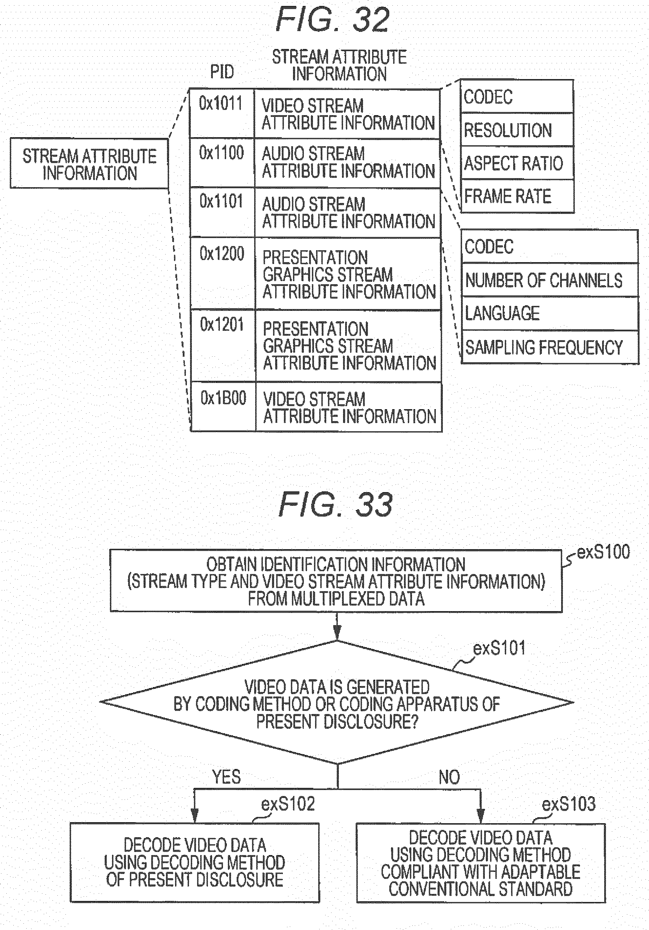

For each PID, attribute information of a corresponding stream included in the multiplexed data is registered in the stream attribute information as illustrated in FIG. 32. The attribute information has different pieces of information for the video stream, the audio stream, the presentation graphics stream, and the interactive graphics stream. Video stream attribute information includes pieces of information such as those regarding a compression codec used to compress the video stream, a resolution of individual picture data of the video stream, an aspect ratio, and a frame rate. Audio stream attribute information includes pieces of information such as those regarding a compression codec used to compress the audio stream, the number of channels included in the audio stream, a supported language, and a sampling frequency. These pieces of information are used in initialization of the decoder before a player performs reproduction, for example.

In the present exemplary embodiment, the stream type contained in the PMT is used among the multiplexed data. Also, in the case where the multiplexed data is recorded on a recording medium, the video stream attribute information contained in the multiplexed data information is used. Specifically, the video coding method or apparatus described in each of the above exemplary embodiments includes a step or unit for setting unique information which indicates whether or not this video data has been generated by the video coding method or apparatus described in each of the above exemplary embodiments, in the stream type contained in the PMT or the video stream attribute information. With this configuration, video data generated using the video coding method or apparatus described in each of the above exemplary embodiments and video data based on another standard can be distinguished from each other.

FIG. 33 illustrates steps included in a video decoding method in accordance with the present exemplary embodiment. In step exS100, the stream type contained in the PMT or the video stream attribute information contained in the multiplexed data information is obtained from the multiplexed data. Then, in step exS101, it is determined whether or not the stream type or the video stream attribute information indicates that this multiplexed data is data that has been generated using the video coding method or apparatus described in each of the above exemplary embodiments. If it is determined from the stream type or the video stream attribute information that this multiplexed data has been generated using the video coding method or apparatus described in each of the above exemplary embodiments, decoding is performed using the video decoding method described in each of the above exemplary embodiments in step exS102. If the stream type or the video stream attribute information indicates that the multiplexed data is based on an existing standard, such as MPEG-2, MPEG-4 AVC, or VC-1, decoding is performed using a video decoding method based on the existing standard in step exS103.

By setting a new unique value in the steam type or the video stream attribute information in this way, it can be determined whether or not decoding can be performed using the video decoding method or apparatus described in each of the above exemplary embodiments at the time of decoding. Accordingly, even in the case where multiplexed data based on a different standard is input, an appropriate decoding method or apparatus can be selected, and thus decoding can be performed without causing an error. Also, the video coding method or apparatus or the video decoding method or apparatus described in the present exemplary embodiment is applicable to any of the aforementioned devices and systems.

FIFTH EXEMPLARY EMBODIMENT

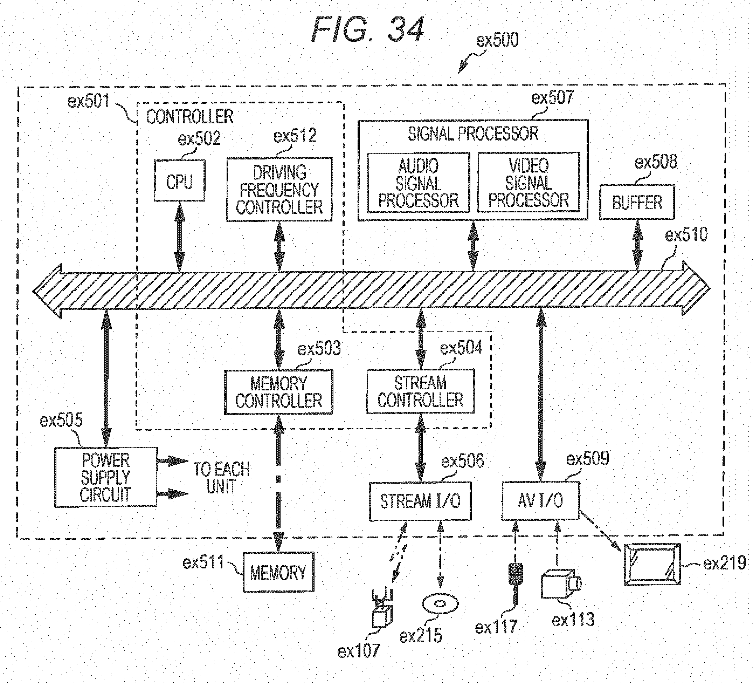

The video coding method and apparatus and the video decoding method and apparatus described in each of the above exemplary embodiments are typically implemented using an LSI which is an integrated circuit. FIG. 34 illustrates an example of a configuration of LSI ex500 which is formed as one chip. LSI ex500 includes controller ex501, CPU ex502, memory controller ex503, stream controller ex504, power supply circuit ex505, stream input/output (I/O) ex506, signal processor ex507, buffer ex508, and audio/video (AV) I/O ex509, which are connected to one another via bus ex510. Upon power-on, power supply circuit ex505 supplies electric power to the individual units to activate the individual units into an operable state.

For example, in the case of performing coding processing, LSI ex500 receives an AV signal from microphone ex117, camera ex113, or the like via AV I/O ex509 in accordance with control performed by controller ex501 which includes CPU ex502, memory controller ex503, stream controller ex504, and driving frequency controller ex512. The input AV signal is temporarily stored in external memory ex511, such as an SDRAM (Synchronous Dynamic Random Access Memory). In accordance with control performed by controller ex501, the stored data is divided into a plurality of portions in accordance with an amount of processing or a processing speed, and the plurality of portions are sent to signal processor ex507. Then, signal processor ex507 codes the audio signal and/or the video signal. The coding processing performed on the video signal here is the coding processing described in each of the above exemplary embodiments. Signal processor ex507 performs processing such as multiplexing of the coded audio data and the coded video data depending on circumstances, and outputs the multiplexed data to outside via stream I/O ex506. This output multiplexed data is transmitted to base station ex107 or written to recording medium ex215. Note that the audio data and the video data may be temporarily stored in buffer ex508 at the time of multiplexing so that these pieces of data are synchronized with each other.

Note that although memory ex511 has been described as a device provided outside LSI ex500 above, memory ex511 may be included in LSI ex500. The number of buffers ex508 is not limited to one and LSI ex500 may include a plurality of buffers. Also, LSI ex500 may be formed as a single chip or a plurality of chips.

Although controller ex501 includes CPU ex502, memory controller ex503, stream controller ex504, and driving frequency controller ex512 above, the configuration of controller ex501 is not limited to this one. For example, signal processor ex507 may further include a CPU. By providing a CPU within signal processor ex507, the processing speed can be further improved. Alternatively, CPU ex502 may include signal processor ex507 or, for example, an audio signal processor which is part of signal processor ex507. In such a case, controller ex501 includes CPU ex502 which includes signal processor ex507 or part of signal processor ex507.

Note that the term "LSI" is used here; however, the configuration may be referred to as an IC, a system LSI, a super LSI, or an ultra LSI depending on the degree of integration.

Also, the circuit integration technique is not limited to LSI, and circuit integration may be implemented using a dedicated circuit or general-purpose processor. An FPGA (Field Programmable Gate Array) that is programmable after manufacturing of an LSI or a reconfigurable processor in which connections and settings of circuit cells within the LSI are reconfigurable may be used. Such a programmable logic device can execute the video coding method or the video decoding method described in each of the above exemplary embodiments typically by loading or reading from a memory or the like a program constituting software or firmware.

Furthermore, if an advance in the semiconductor technology or another related technology yields a circuit integration technology that may substitute for LSI, the functional blocks may be integrated using such a technology obviously. Adaptation of the biotechnology may be possible.

SIXTH EXEMPLARY EMBODIMENT

It is considered that an amount of processing increases in the case of decoding video data generated using the video coding method or apparatus described in each of the above exemplary embodiments, compared with the case of decoding video data based on an existing standard, such as MPEG-2, MPEG-4 AVC, or VC-1. Accordingly, in LSI ex500, a higher driving frequency needs to be set in CPU ex502 than that used when video data based on an existing standard is decoded. However, making the driving frequency higher undesirably increases power consumption.

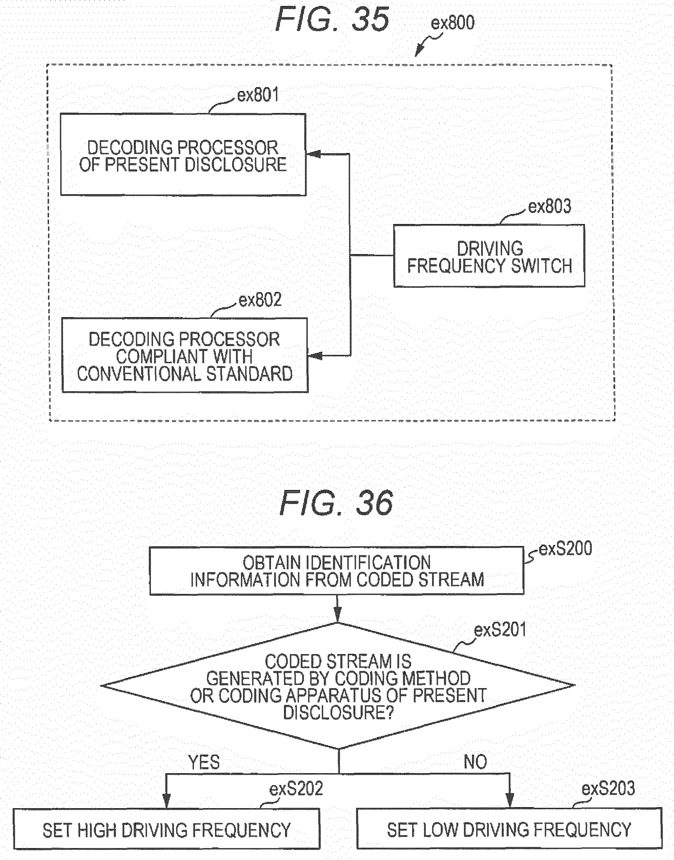

To address this issue, the video decoding apparatus, such as television ex300 or LSI ex500, is configured to identify a standard which video data is based on, and to switch between the driving frequencies in accordance with the standard. FIG. 35 illustrates configuration ex800 in accordance with the present exemplary embodiment. Driving frequency switch ex803 sets the driving frequency high in the case where video data is data that has been generated using the video coding method or apparatus described in each of the above exemplary embodiments. Driving frequency switch ex803 also instructs decoding processor ex801 which executes the video decoding method described in each of the above exemplary embodiments to decode the video data. On the other hand, in the case where the video data is data based on an existing standard, driving frequency switch ex803 sets the driving frequency lower than that of the case where the video data is data that has been generated using the video coding method or apparatus described in each of the above exemplary embodiments. Then, driving frequency switch ex803 instructs decoding processor ex802 compliant with the existing standard to decode the video data.

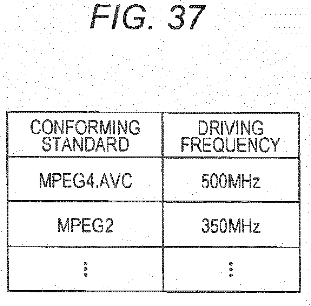

More specifically, driving frequency switch ex803 includes CPU ex502 and driving frequency controller ex512 illustrated in FIG. 34. Decoding processor ex801 that executes the video decoding method described in each of the above exemplary embodiments and decoding processor ex802 compliant with an existing standard correspond to signal processor ex507 illustrated in FIG. 34. CPU ex502 identifies a standard which video data is based on. Then, based on a signal from CPU ex502, driving frequency controller ex512 sets the driving frequency. Also, based on a signal from CPU ex502, signal processor ex507 decodes the video data. Here, the use of the identification information described in the fourth exemplary embodiment, for example, in identification of the video data is conceivable. The identification information is not limited to the one described in the fourth exemplary embodiment and may be any type of information with which a standard which the video data is based on is identifiable. For example, in the case where a standard which video data is based on is identifiable on the basis of an external signal that identifies whether the video data is used for the television or for a disc, the identification can be made on the basis of such an external signal. It is also conceivable to select the driving frequency of CPU ex502 in accordance with a lookup table in which the standard for the video data and the driving frequency are associated with each other as illustrated in FIG. 37, for example. The lookup table is stored in buffer ex508 or an internal memory of LSI ex500, and CPU ex502 refers to this lookup table. In this way, the driving frequency can be selected.

FIG. 36 illustrates steps for performing the method according to the present exemplary embodiment. First, in step exS200, signal processor ex507 obtains identification information from multiplexed data. Then, in step exS201, based on the identification information, CPU ex502 identifies whether or not video data is video data that has been generated using the video coding method or apparatus described in each of the above exemplary embodiments. If the video data is video data that has been generated using the video coding method or apparatus described in each of the above exemplary embodiments, CPU ex502 sends a signal for setting a high driving frequency to driving frequency controller ex512 in step exS202. Then, driving frequency controller ex512 sets a high driving frequency. On the other hand, if the identification information indicates that the video data is video data based on an existing standard, such as MPEG-2, MPEG-4 AVC, or VC-1, CPU ex502 sends a signal for setting a low driving frequency to driving frequency controller ex512 in step exS203. Then, driving frequency controller ex512 sets a lower driving frequency than that used when the video data is video data that has been generated using the video coding method or apparatus described in each of the above exemplary embodiments.

Further, by changing a voltage supplied to LSI ex500 or an apparatus including LSI ex500 in conjunction with switching of the driving frequency, the power-saving effect can be further increased. For example, it is conceivable that in the case where a low driving frequency is set, a voltage supplied to LSI ex500 or an apparatus including LSI ex500 is set to be lower in response to this setting than that of the case where a high driving frequency is set.

It is sufficient that the driving frequency is set to be higher in the case where an amount of decoding processing is large and set to be lower in the case where an amount of decoding processing is small. Accordingly, the driving frequency setting method is not limited to the above-described setting method. For example, in the case where an amount of processing for decoding video data based on the MPEG-4 AVC standard is larger than an amount of processing for decoding video data generated using the video coding method or apparatus described in each of the above exemplary embodiments, settings of the driving frequency can be made opposite to the settings of the above-described case.

Further, the driving frequency setting method is not limited to a configuration for setting the driving frequency low. For example, in the case where the identification information indicates that the video data is video data that has been generated using the video coding method or apparatus described in each of the above exemplary embodiments, a voltage supplied to LSI ex500 or an apparatus including LSI ex500 may be set to be high. In the case where the identification information indicates that the video data is video data based on an existing standard, such as MPEG-2, MPEG-4 AVC, or VC-1, a voltage supplied to LSI ex500 or an apparatus including LSI ex500 may be set to be low. Alternatively, in another example, in the case where the identification information indicates that the video data is video data that has been generated using the video coding method or apparatus described in each of the above exemplary embodiments, driving of CPU ex502 is not stopped. In the case where the identification information indicates that the video data is video data based on an existing standard, such as MPEG-2, MPEG-4 AVC, or VC-1, driving of CPU ex502 may be temporarily stopped because there is a surplus of capacity relative to the processing load. When there is a surplus of capacity relative to the processing load in the case where the identification information indicates that the video data is video data that has been generated using the video coding method or apparatus described in each of the above exemplary embodiments, driving of CPU ex502 may be temporarily stopped. In this case, a period over which CPU ex502 is stopped may be set to be shorter than that of the case where the identification information indicates that the video data is video data based on an existing standard, such as MPEG-2, MPEG-4 AVC, or AVC-1.

By switching between the driving frequencies in accordance with the standard which the video data is based on in this manner, electric power can be saved. Also, in the case where LSI ex500 or an apparatus including LSI ex500 is driven with a battery, the battery can be made last longer as a result of power-saving.

SEVENTH EXEMPLARY EMBODIMENT

A plurality of pieces of video data based on different standards are sometimes input to the aforementioned devices and systems, such as television ex300 and mobile phone ex114. In order to enable decoding even in the case where a plurality of pieces of video data based on different standards are input, signal processor ex507 of LSI ex500 needs to support the plurality of standards. However, the use of signal processors ex507 for the respective standards undesirably makes the circuit scale of LSI ex500 larger and increases the cost.

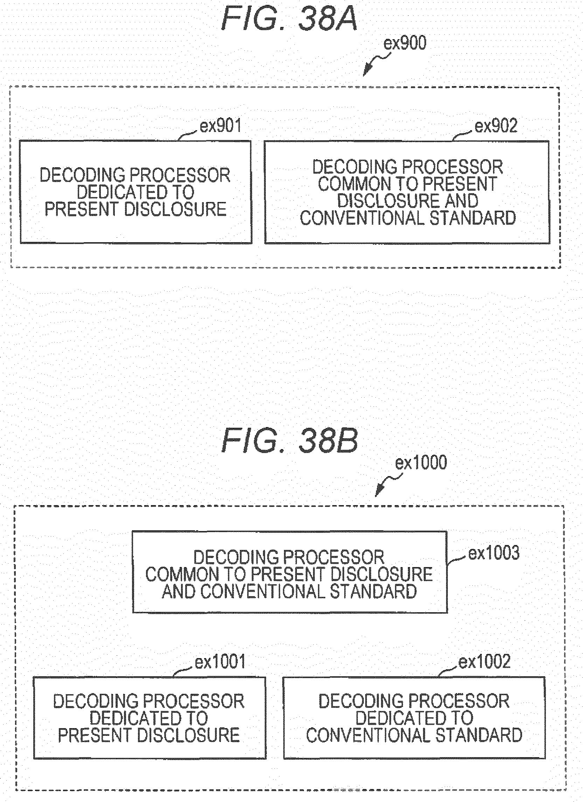

To address this issue, a decoding processor that executes the video decoding method described in each of the above exemplary embodiments and a decoding processor compliant with an existing standard, such as MPEG-2, MPEG-4 AVC, or VC-1, share some of their components. FIG. 38A illustrates an example of this configuration ex900. For example, the video decoding method described in each of the above exemplary embodiments and the video decoding method compliant with the MPEG-4 AVC standard share some of contents of processing, such as entropy decoding, inverse quantization, deblocking filtering, and motion compensation. Accordingly, the following configuration is conceivable. For the shared processing contents, decoding processor ex902 compliant with the MPEG-4 AVC standard in used in common. For other processing contents that are not compliant with the MPEG-4 AVC standard and are unique to an aspect of the present invention, dedicated decoding processor ex901 may be used. In particular, an aspect of the present invention includes a feature in motion compensation. Thus, for example, the dedicated decoding processing unit ex901 may be used for motion compensation and the decoding processing unit ex902 may be used in common for any of or all of entropy decoding, inverse quantization, and deblocking filtering. Alternatively, as for sharing of the decoding processor, a configuration may be used in which a decoding processor that executes the video decoding method described in each of the above exemplary embodiments is used for the common processing contents and a dedicated decoding processor is used for processing contents unique to the MPEG-4 AVC standard.

FIG. 38B illustrates another example ex1000 that implements sharing of part of processing. In this example, dedicated decoding processor ex1001 that handles processing contents unique to an aspect of the present invention, dedicated decoding processor ex1002 that handles processing contents unique to an existing standard, and shared decoding processor ex1003 that handles processing contents that are common to the video decoding method according to the aspect of the present invention and the video decoding method according to the existing standard are used. Here, dedicated decoding processors ex1001 and ex1002 are not necessarily specialized for the processing contents unique to the aspect of the present invention and the existing standard, respectively, and may be also capable of executing other general processing. Also, the configuration according to the present exemplary embodiment can be implemented using LSI ex500.

By sharing a decoding processor for processing contents that are common to the video decoding method according to an aspect of the present invention and the video decoding method according to an existing standard, the circuit scale and cost of LSI ex500 can be reduced.

INDUSTRIAL APPLICABILITY

The embodiments of the present invention are applicable to an image processing apparatus, an image capturing apparatus, and an image reproduction apparatus. Specifically, the embodiments of the present invention are applicable to a digital still camera, a camcorder, a camera-equipped mobile phone, a smartphone, for example.

REFERENCE MARKS IN THE DRAWINGS

    100: image coding apparatus
    101: motion model obtaining section
    102: block divider
    103: subtractor
    104: frequency transformer
    105: quantizer
    106: entropy coder
    107, 202: inverse quantizer
    108, 203: inverse frequency transformer
    109, 204: adder
    110, 205: intra-predictor
    111, 206: loop filter
    112, 207: frame memory
    113, 208: inter-predictor
    114, 209: switch
    121: input image
    122: coding block
    123, 128, 224: difference block
    124, 125, 127, 222, 223: coefficient block
    126, 221: bit stream
    129, 225: decoded block
    130, 226: decoded image
    131, 132, 133, 227, 228, 229: prediction block
    134, 230: motion model information
    135, 231: prediction information
    152: representative image
    153: object image
    154: background image
    155, 241: reference image
    200: image decoding apparatus
    201: entropy decoder

    211: inter-prediction image generator
    212: reference image generator

## Claims

1. An image coding method for coding a plurality of images, the image coding method comprising:

    a obtaining step of obtaining motion model information indicating three-dimensional movement of a body in the plurality of images;
    a reference image generating step of generating a reference image using the motion model information; and
    a coding step of coding a target image included in the plurality of images by referring to the generated reference image.

2. The image coding method according to claim 1, wherein in the obtaining step, the motion model information is extracted from at least one image included in the plurality of images.

3. The image coding method according to claim 1 or 2, wherein in the reference image generating step, an object image is generated by performing deformation processing on a representative image of the body based on the motion model information, and the reference image is generated by a combination of the object image and a background image.

4. The image coding method according to claim 3, wherein the motion model information is expressed as a plurality of coefficients of a high-order transform matrix, and in the reference image generating step, the deformation processing is performed by calculating the representative image using the high-order transform matrix.

5. The image coding method according to claim 4, wherein the high-order transform matrix includes a coefficient changing with time.

6. The image coding method according to any one of claims 1 to 5, further comprising:

    a prediction step of calculating a prediction value of a motion vector of a block included in the target image using the motion model information; and
    a motion searching step of performing motion searching processing on the block using the prediction value as an initial value.

7. The image coding method according to any one of claims 1 to 5, further comprising:

an estimating step of estimating the motion vector of the block included in the target image;

a prediction step of calculating a prediction motion vector candidate for the block included in the target image using the motion model information; and

a motion vector coding step of coding a difference between one of a plurality of prediction motion vector candidates including the calculated prediction motion vector candidate and the estimated motion vector.

8. An image decoding method for decoding a plurality of images from a bit stream, the image decoding method comprising:

a obtaining step of obtaining motion model information indicating three-dimensional movement of a body in the plurality of images;

a reference image generating step of generating a reference image using the motion model information; and

a decoding step of decoding a target image included in the plurality of images by referring to the generated reference image.

9. The image decoding method according to claim 8, wherein in the obtaining step, the motion model information is obtained from the bit stream.

10. The image decoding method according to claim 8 or 9, wherein in the reference image generating step, an object image is generated by performing deformation processing on a representative image of the body based on the motion model information, and the reference image is generated by a combination of the object image and a background image.

11. The image decoding method according to any one of claims 8 to 10, wherein

the motion model information is expressed as a plurality of coefficients of a high-order transform matrix, and

in the reference image generating step, the deformation processing is performed by calculating the target image using the high-order transform matrix.

12. The image decoding method according to claim 11, wherein the high-order transform matrix includes a coefficient changing with time.

13. The image decoding method according to any one of claims 8 to 12, further comprising:

a difference motion vector decoding step of decoding a difference value of the motion vector of the block included in the target image;

a prediction step of calculating a prediction motion vector candidate for the block included in the target image using the motion model information; and

a calculating step of calculating the motion vector by adding one of a plurality of prediction motion vector candidates including the calculated prediction motion vector candidate and the difference value to each other.

14. An image coding apparatus that codes a plurality of images, the image coding apparatus comprising:

processing circuitry; and

a memory connected to the processing circuitry, wherein the processing circuitry performs the image coding method according to claim 1 using the memory.

15. An image decoding apparatus that decodes a plurality of images from a bit stream, the image decoding apparatus comprising:

processing circuitry; and

a memory connected to the processing circuitry, wherein the processing circuitry performs the image decoding method according to claim 8 using the memory.

16. A content distribution method comprising:

a receiving step of receiving a content distribution request; and

a transmitting step of transmitting a content subjected to the image coding method according to claim 1 based on the content distribution request.

*FIG. 1*

# FIG. 2

```
                    ( CODING PROCESSING START )
                                 │
          ┌──────────────────────┘
          │                      ▼
          │      ┌─────────────────────────────────┐    S101
          │      │  OBTAIN MOTION MODEL INFORMATION │
          │      └─────────────────────────────────┘
          │                      │
          │                      ▼
          │      ┌─────────────────────────────────┐    S102
          │      │  DIVIDE INPUT IMAGE INTO CODE BLOCKS │
          │      └─────────────────────────────────┘
          │                      │
          │                      ▼
          │      ┌─────────────────────────────────┐    S103
          │      │     GENERATE PREDICTION BLOCK   │
          │      └─────────────────────────────────┘
          │                      │
          │                      ▼
          │      ┌─────────────────────────────────┐    S104
          │      │     GENERATE DIFFERENCE BLOCK   │
          │      └─────────────────────────────────┘
          │                      │
          │                      ▼
          │      ┌─────────────────────────────────┐    S105
          │      │   GENERATE COEFFICIENT BLOCK    │
          │      │  (FREQUENCY TRANSFORM)          │
          │      │   AND QUANTIZATION              │
          │      └─────────────────────────────────┘
          │                      │
          │                      ▼
          │      ┌─────────────────────────────────┐    S106
          │      │       CODE COEFFICIENT          │
          │      └─────────────────────────────────┘
          │                      │
          │                      ▼
          │      ┌─────────────────────────────────┐    S107
          │      │   RESTORE DIFFERENCE BLOCK      │
          │      │  (INVERSE FREQUENCY TRANSFORM)  │
          │      │   AND INVERSE QUANTIZATION      │
          │      └─────────────────────────────────┘
          │                      │
          │                      ▼
          │      ┌─────────────────────────────────┐    S108
          │      │     GENERATE DECODED BLOCK      │
          │      └─────────────────────────────────┘
          │                      │
          │                      ▼              S109
          │  NO    ◇─────────────────────────◇
          └────────   CODING IS
                      COMPLETED FOR WHOLE
                      IMAGE?
                    ◇─────────────────────────◇
                                 │ YES
                                 ▼
                    ( CODING PROCESSING END )
```

26

## FIG. 3

S101

OBTAIN MOTION MODEL INFORMATION

START

EXTRACT MOTION MODEL INFORMATION — S111

MOTION MODEL INFORMATION EXISTS? — S112

NO

YES

CODE MOTION MODEL INFORMATION — S113

END

## FIG. 4

CLOCK TIME t

A0

CLOCK TIME t+N

A0

P0

## FIG. 5

CLOCK TIME t    CLOCK TIME t + N

A1

# FIG. 6

REFERENCE META INFORMATION GROUP

| ID | COORDINATE x | COORDINATE y | SIZE (WIDTH) | SIZE (HEIGHT) | |
|---|---|---|---|---|---|
| 0 | x0 | y0 | w0 | h0 | |
| 1 | x1 | y1 | w1 | h1 | CLOCK TIME T−1 |
| 2 | x2 | y2 | w2 | h2 | |
| ⋮ | ⋮ | ⋮ | ⋮ | ⋮ | |
| N | xN | yN | wN | hN | |

| ID | COORDINATE x | COORDINATE y | SIZE (WIDTH) | SIZE (HEIGHT) | |
|---|---|---|---|---|---|
| 1 | x1′ | y1′ | w1′ | h1′ | |
| 2 | x2′ | y2′ | w2′ | h2′ | CLOCK TIME T |
| 3 | x3′ | y3′ | w3′ | h3′ | |
| ⋮ | ⋮ | ⋮ | ⋮ | ⋮ | |
| N | xN′ | yN′ | wN′ | hN′ | |

| ID | COORDINATE x | COORDINATE y | SIZE (WIDTH) | SIZE (HEIGHT) | |
|---|---|---|---|---|---|
| 0 | x0″ | y0″ | w0″ | h0″ | |
| 1 | x2″ | y1″ | w1″ | h1″ | CLOCK TIME T+1 |
| 4 | x4″ | y4″ | w4″ | h4″ | |
| ⋮ | ⋮ | ⋮ | ⋮ | ⋮ | |
| N″ | xN″ | yN″ | wN″ | hN″ | |

DIFFERENCE BETWEEN FRAMES

| ID | COORDINATE x | COORDINATE y | SIZE (WIDTH) | SIZE (HEIGHT) |
|---|---|---|---|---|
| 1 | $\delta x1$ | $\delta y1$ | $\delta w1$ | $\delta h1$ |
| 2 | $\delta x2$ | $\delta y2$ | $\delta w2$ | $\delta h2$ |
| 4 | $\delta x4$ | $\delta y4$ | $\delta w4$ | $\delta h4$ |
| ⋮ | ⋮ | ⋮ | ⋮ | ⋮ |
| M | $\delta xM$ | $\delta yM$ | $\delta wM$ | $\delta hM$ |

⇓

DERIVATION OF MOTION MODEL INFORMATION INDICATING THREE-DIMENSIONAL MOVEMENT AND DEFORMATION

$$\begin{bmatrix} \alpha & B & \cdots \\ \cdot & \gamma & \\ \cdot & & \cdot \\ \cdot & & \end{bmatrix}$$

EP 3 171 597 A1

## FIG. 7

S103

GENERATE PREDICTION BLOCK

START

INTRA-PREDICTION — S121

INTER-PREDICTION — S122

DECIDE INTRA OR INTER — S123

END

## FIG. 8

S122

INTER-PREDICTION

START

GENERATE REFERENCE
IMAGE USING MOTION MODEL — S131

GENERATE
INTER-PREDICTION IMAGE — S132

END

# FIG. 9

S131

GENERATE REFERENCE IMAGE USING MOTION MODEL

START

MOTION MODEL INFORMATION EXISTS? — S141

NO

YES

GENERATE BACKGROUND IMAGE — S142

EXTRACT REPRESENTATIVE IMAGE OF OBJECT FROM ALREADY-CODED IMAGE — S143

GENERATE OBJECT IMAGE FROM REPRESENTATIVE IMAGE USING MOTION MODEL — S144

GENERATE REFERENCE IMAGE BY COMBINING BACKGROUND IMAGE AND OBJECT IMAGE — S145

END

# FIG. 10

## FIG. 11

S132

GENERATE INTER-PREDICTION IMAGE

START

ESTIMATE MOTION — S151

SEARCH PREDICTION MOTION VECTOR — S152

GENERATE DIFFERENCE MOTION VECTOR — S153

END

## FIG. 12

S151

ESTIMATE MOTION

START

S161

MOTION MODEL
INFORMATION EXISTS? —— YES

NO

S162
SET VALUE OBTAINED BY
CONVENTIONAL TECHNIQUE
TO INITIAL VALUE

S163
SET VALUE PREDICTED FROM
MOTION MODEL
TO INITIAL VALUE

S164
SEARCH MOTION

END

# FIG. 13

S152

**SEARCH PREDICTION MOTION VECTOR**

```
         ( START )
             │
             ▼
   ┌───────────────────┐
   │ ADD MOTION VECTOR │ ─ S171
   │ GROUP OF PERIPHERAL│
   │ BLOCK TO CANDIDATE │
   └───────────────────┘
             │
             ▼              S172
          ╱───────────╲
         ╱ MOTION MODEL ╲  YES    ┌────────────────────┐
         ╲ INFORMATION   ╱────────▶                    │  S173
         ╲ EXISTS?     ╱          │ ADD MOTION VECTOR  │
          ╲───────────╱           │ OBTAINED BY MOTION │
             │ NO                 │ MODEL TO CANDIDATE │
             │                    └────────────────────┘
             │◀───────────────────────────┘
             ▼
   ┌───────────────────┐
   │ SELECT PREDICTION │ ─ S174
   │ MOTION VECTOR     │
   │ FROM CANDIDATE    │
   └───────────────────┘
             │
             ▼
          ( END )
```

## FIG. 14

200

IMAGE DECODING APPARATUS

221
BIT
STREAM

201 ENTROPY DECODER

222

202 INVERSE QUANTIZER

223

203 INVERSE FREQUENCY TRANSFORMER

230    231

228

209

229

224

204 ⊕

227

225

208 INTER-PREDICTOR

205 INTRA-PREDICTOR

206 LOOP FILTER

226
DECODED IMAGE

207 FRAME MEMORY

# FIG. 15

## FIG. 16

```
        ( DECODING PROCESSING START )
                      │
                      ▼
    ┌─────────────────────────────────────┐
    │  DECODE MOTION MODEL INFORMATION   │──S201
    └─────────────────────────────────────┘
                      │
                      ▼
    ┌─────────────────────────────────────┐
    │    DECODE PREDICTION INFORMATION    │──S202
    └─────────────────────────────────────┘
                      │
                      ▼
    ┌─────────────────────────────────────┐
    │         DECODE COEFFICIENT          │──S203
    └─────────────────────────────────────┘
                      │
                      ▼
    ┌─────────────────────────────────────┐
    │      RESTORE DIFFERENCE BLOCK       │──S204
    │  (INVERSE FREQUENCY TRANSFORM       │
    │   AND INVERSE QUANTIZATION  )       │
    └─────────────────────────────────────┘
                      │
                      ▼
    ┌─────────────────────────────────────┐
    │      GENERATE PREDICTION BLOCK      │──S205
    └─────────────────────────────────────┘
                      │
                      ▼
    ┌─────────────────────────────────────┐
    │       GENERATE DECODED BLOCK        │──S206
    └─────────────────────────────────────┘
                      │
                      ▼
                                     S207
         ╱────────────────────────╲
   NO   ╱      DECODING IS          ╲
◄──────  COMPLETED FOR ALL DECODED  ╲
         ╲          BLOCKS?          ╱
          ╲────────────────────────╱
                      │ YES
                      ▼
        ( DECODING PROCESSING END )
```

## FIG. 17

S201

DECODE MOTION MODEL INFORMATION

START

MOTION MODEL INFORMATION EXISTS? — S211 — NO

YES

DECODE MOTION MODEL INFORMATION — S212

END

## FIG. 18

S205

GENERATE PREDICTION BLOCK

START

INTRA — DETERMINE INTRA OR INTER — S221 — INTER

INTRA-PREDICTION — S222

INTER-PREDICTION — S223

END

# FIG. 19

S223

INTER-PREDICTION

START

GENERATE REFERENCE
IMAGE USING MOTION
MODEL INFORMATION — S241

GENERATE
INTER-PREDICTION IMAGE — S242

END

FIG. 20

EP 3 171 597 A1

# FIG. 21

ex200

ex214

ex213

ex212

ex202

ex114

ex204

ex205

ex201

ex203

ex210

ex211

ex215

ex219

ex217

ex216

SD

ex300

ex218

## FIG. 22

ex300

ex104

ex220  ex218  ex216  ex215  TELEPHONE NETWORK

ex317

| OPERATING INPUTTER | BRIDGE | SLOT | DRIVER | MODEM |

ex312  ex313  ex314  ex315  ex316

CONTROLLER

ex310

ex306

ex320  ex318  ex309

ex301  ex302  ex303

ex204

TUNER ⟷ MODULATOR/DEMODULATOR ⟷ MULTIPLEXER/DEMULTIPLEXER

BUFFER ⟷ AUDIO SIGNAL PROCESSOR ⟷ BUFFER

ex304

ex321  ex319  ex307

ex203

BUFFER ⟷ VIDEO SIGNAL PROCESSOR ⟷ BUFFER ⟷ DISPLAY

ex305  ex308

POWER SUPPLY CIRCUIT

ex311  ex500

EP 3 171 597 A1

44

# FIG. 23

# FIG. 24

ex215

ex231

ex230

| INNER CIRCUMFERENTIAL AREA | ex232 |
| DATA RECORDING AREA | ex233 |
| OUTER CIRCUMFERENTIAL AREA | ex234 |

## FIG. 25A

# FIG. 25B

## FIG. 26

| |
|---|
| VIDEO STREAM (PID = 0x1011 MAIN VIDEO) |
| AUDIO STREAM (PID = 0x1100) |
| AUDIO STREAM (PID = 0x1101) |
| PRESENTATION GRAPHICS STREAM (PID = 0x1200) |
| PRESENTATION GRAPHICS STREAM (PID = 0x1201) |
| INTERACTIVE GRAPHICS STREAM (PID = 0x1400) |
| VIDEO STREAM (PID = 0x1B00 SUB VIDEO) |
| VIDEO STREAM (PID = 0x1B01 SUB VIDEO) |

FIG. 27

## FIG. 28

VIDEO FRAME SEQUENCE

| I PICTURE | P PICTURE | B PICTURE | B PICTURE | P PICTURE | B PICTURE | ··· |

yy1  yy2  yy3  yy4

PES PACKET SEQUENCE

| | I PICTURE | | P PICTURE | | B PICTURE | | B PICTURE | ··· |

PES HEADER   PES PAYLOAD

# FIG. 29

TS PACKET SEQUENCE

TS HEADER
(4Byte)

TS PAYLOAD
(184Byte)

SOURCE PACKET
SEQUENCE

TP_extra_header
(4Byte)

TS PACKET
(188Byte)

MULTIPLEXED DATA

SPN  0  1  2  3  4  5  6  7      ...

SOURCE PACKET

## FIG. 30

PMT DATA STRUCTURE

| PMT HEADER |
| --- |
| DESCRIPTOR #1 |
| ... |
| DESCRIPTOR #N |
| STREAM INFORMATION #1 |
| ... |
| STREAM INFORMATION #N |

| STREAM TYPE |
| --- |
| PID |
| STREAM DESCRIPTOR #1 |
| ... |
| STREAM DESCRIPTOR #N |

## FIG. 31

MULTIPLEXED DATA
INFORMATION FILE

XXX. CLPI

| MULTIPLEXED DATA INFORMATION |
| --- |
| STREAM ATTRIBUTE INFORMATION |
| ENTRY MAP |

| SYSTEM RATE |
| --- |
| PLAYBACK START TIME |
| PLAYBACK END TIME |

MULTIPLEXED DATA (XXX. M2TS)

## FIG. 32

STREAM ATTRIBUTE
INFORMATION

| PID | STREAM ATTRIBUTE INFORMATION |
|-----|------------------------------|
| 0x1011 | VIDEO STREAM ATTRIBUTE INFORMATION |
| 0x1100 | AUDIO STREAM ATTRIBUTE INFORMATION |
| 0x1101 | AUDIO STREAM ATTRIBUTE INFORMATION |
| 0x1200 | PRESENTATION GRAPHICS STREAM ATTRIBUTE INFORMATION |
| 0x1201 | PRESENTATION GRAPHICS STREAM ATTRIBUTE INFORMATION |
| 0x1B00 | VIDEO STREAM ATTRIBUTE INFORMATION |

CODEC

RESOLUTION

ASPECT RATIO

FRAME RATE

CODEC

NUMBER OF CHANNELS

LANGUAGE

SAMPLING FREQUENCY

## FIG. 33

OBTAIN IDENTIFICATION INFORMATION
(STREAM TYPE AND VIDEO STREAM ATTRIBUTE INFORMATION)
FROM MULTIPLEXED DATA ⟋exS100

VIDEO DATA IS GENERATED
BY CODING METHOD OR CODING APPARATUS OF
PRESENT DISCLOSURE? ⟋exS101

YES       NO

exS102       exS103

DECODE VIDEO DATA
USING DECODING METHOD
OF PRESENT DISCLOSURE

DECODE VIDEO DATA
USING DECODING METHOD
COMPLIANT WITH ADAPTABLE
CONVENTIONAL STANDARD

## FIG. 34

ex500

ex501

CONTROLLER

ex502
CPU

ex512
DRIVING FREQUENCY CONTROLLER

ex507
SIGNAL PROCESSOR

AUDIO SIGNAL PROCESSOR

VIDEO SIGNAL PROCESSOR

ex508
BUFFER

ex510

ex503
MEMORY CONTROLLER

ex504
STREAM CONTROLLER

ex505
POWER SUPPLY CIRCUIT

TO EACH UNIT

ex506
STREAM I/O

ex509
AV I/O

ex511
MEMORY

ex107

ex215

ex117

ex113

ex219

EP 3 171 597 A1

FIG. 35                    ex800

ex801

DECODING PROCESSOR
OF PRESENT DISCLOSURE

ex803

DRIVING
FREQUENCY SWITCH

ex802

DECODING PROCESSOR
COMPLIANT WITH
CONVENTIONAL STANDARD

FIG. 36

OBTAIN IDENTIFICATION
INFORMATION FROM CODED STREAM          exS200

CODED STREAM IS
GENERATED BY CODING METHOD
OR CODING APPARATUS OF PRESENT
DISCLOSURE?          exS201

YES          exS202

NO          exS203

SET HIGH DRIVING FREQUENCY          SET LOW DRIVING FREQUENCY

## FIG. 37

| CONFORMING STANDARD | DRIVING FREQUENCY |
|:---:|:---:|
| MPEG4.AVC | 500MHz |
| MPEG2 | 350MHz |
| ⋮ | ⋮ |

# FIG. 38A

ex900

| ex901 | ex902 |
|---|---|
| DECODING PROCESSOR DEDICATED TO PRESENT DISCLOSURE | DECODING PROCESSOR COMMON TO PRESENT DISCLOSURE AND CONVENTIONAL STANDARD |

# FIG. 38B

ex1000

DECODING PROCESSOR COMMON TO PRESENT DISCLOSURE AND CONVENTIONAL STANDARD — ex1003

| ex1001 | ex1002 |
|---|---|
| DECODING PROCESSOR DEDICATED TO PRESENT DISCLOSURE | DECODING PROCESSOR DEDICATED TO CONVENTIONAL STANDARD |

## INTERNATIONAL SEARCH REPORT

International application No.

PCT/JP2015/002970

A. CLASSIFICATION OF SUBJECT MATTER
*H04N19/513*(2014.01)i

According to International Patent Classification (IPC) or to both national classification and IPC

B. FIELDS SEARCHED

Minimum documentation searched (classification system followed by classification symbols)
H04N19/513

Documentation searched other than minimum documentation to the extent that such documents are included in the fields searched
Jitsuyo Shinan Koho 1922-1996 Jitsuyo Shinan Toroku Koho 1996-2015
Kokai Jitsuyo Shinan Koho 1971-2015 Toroku Jitsuyo Shinan Koho 1994-2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2012-151711 A (Renesas Electronics Corp.), 09 August 2012 (09.08.2012), | 1,3-5,8, 10-12,14-16 |
| Y | paragraphs [0023] to [0092]; fig. 1 to 6 | 6,7,13 |
| A | & US 2012/0188375 A1 | 9 |
| X | JP 2005-323021 A (Fuji Photo Film Co., Ltd.), 17 November 2005 (17.11.2005), | 1-3,8-10, 14-16 |
| Y | paragraphs [0014] to [0044]; fig. 1 to 6 | 6,7,13 |
| A | (Family: none) | 4,5,11,12 |
| Y | JP 2011-61302 A (Hitachi Kokusai Electric Inc.), 24 March 2011 (24.03.2011), paragraphs [0011], [0046]; fig. 3, 13 (Family: none) | 6,7,13 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 July 2015 (30.07.15) | 11 August 2015 (11.08.15) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (July 2009)

**INTERNATIONAL SEARCH REPORT**

International application No.

PCT/JP2015/002970

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-18091 A  (Toshiba Corp.),<br>22 January 1999 (22.01.1999),<br>paragraphs [0035] to [0095]; fig. 1 to 21<br>(Family: none) | 1-16 |
| A | JP 11-150726 A  (Toyota Motor Corp.),<br>02 June 1999 (02.06.1999),<br>paragraphs [0032], [0033]; fig. 3, 5<br>& US 6075559 A1 | 1-16 |

Form PCT/ISA/210 (continuation of second sheet) (July 2009)